# EUROPEAN PATENT APPLICATION

(11) **EP 4 838 809 A1**
(43) Date of publication of application: **11.11.2026**
(21) Application number: 25744410.9
(22) Date of filing: 02.01.2025
(51) Int. Cl.: H04B 7/185

(54) **COMMUNICATION METHOD AND APPARATUS**

(30) Priority: 26.01.2024 CN 202410120659
(71) Applicant: Huawei Technologies Co., Ltd., Shenzhen, Guangdong 518129 (CN)
(72) Inventor: WANG, Yu, Shenzhen, Guangdong 518129 (CN); WANG, Jun, Shenzhen, Guangdong 518129 (CN); YU, Tianhang, Shenzhen, Guangdong 518129 (CN); KONG, Chuili, Shenzhen, Guangdong 518129 (CN)
(74) Representative: Huawei European IPR
(86) International application number: PCT/CN2025/070270
(87) International publication number: WO 2025/156964

(57) **Abstract**

This application relates to the field of communication technologies, and provides a communication method and apparatus. The method includes: A terminal device determines a first parameter, where the first parameter is associated with an angle, and the angle includes a beam steering angle or an elevation angle. The terminal device determines a reference location of a first region based on the first parameter and a first mapping relationship, where the first mapping relationship indicates a conversion relationship between the first parameter and the reference location of the first region.

## Description

This application claims priority to Chinese Patent Application No. 202410120659.4, filed with the China National Intellectual Property Administration on January 26, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a satellite communication system, the beam footprint of a satellite is based on geographic regions. For example, a satellite beam covers one or more regions within a period of time. If a terminal device is located in the region covered by the satellite beam, the terminal device may be served by the satellite beam, to perform communication. Conversely, if the terminal device is located outside the region covered by the satellite beam, the terminal device cannot perform communication.

However, in a conventional technology, a region determining manner has poor flexibility, and causes high signaling overheads. This affects communication effectiveness.

### SUMMARY

To resolve the foregoing technical problem, this application provides a communication method and apparatus, to enable a terminal device to more flexibly determine a region covered by a satellite beam, and cause low signaling overheads, to help improve communication effectiveness.

To achieve the foregoing objective, this application uses the following technical solutions.

According to a first aspect, a communication method is provided. The method may be performed by a terminal device. Unless otherwise specified, the "terminal device" in this application may be the terminal device, may be a component (for example, a processor, a chip, or a chip system) in the terminal device, or may be a logical module or software that can implement all or a part of functions of the terminal device. The following provides descriptions by using an example in which the method is performed by the terminal device. The method includes:
The terminal device determines a first parameter, where the first parameter is associated with an angle, and the angle includes a beam steering angle or an elevation angle. The terminal device determines a reference location of a first region based on the first parameter and a first mapping relationship, where the first mapping relationship indicates a conversion relationship between the first parameter and the reference location of the first region.

In this way, because the first mapping relationship can indicate the conversion relationship between the first parameter and the reference location of the first region, when the terminal device has determined the first parameter, the terminal device may determine the reference location of the first region based on the first parameter and the first mapping relationship.

Because the first parameter is associated with the angle, the first region may be regions covered by beams with different beam steering angles, or the first region may be regions at different elevation angles of the terminal device. To be specific, a radius of the first region may have a plurality of values. Compared with an H3 geographic grid-based method that supports only 16 region radii, this application can adapt to regions with different radii. In other words, even for regions with different radii, the terminal device may determine the reference location of the first region based on the first parameter and the first mapping relationship, to improve region determining flexibility of the terminal device.

Furthermore, because the reference location of the first region may be determined by using the first parameter, the terminal device and a network device may interact based on the first parameter. A quantity of bits needed for indicating the first parameter is smaller than that needed for communicating a contour of a region covered by a beam, a beam-position reference location in an H3 geographic grid, or the like. Therefore, signaling overheads are lower.

In addition, the terminal device may perform communication based on the reference location of the first region. For example, when the first region is an active region of the network device, if the terminal device is located in the first region, the terminal device may communicate with the network device, to help improve communication effectiveness.

In a possible design, the method further includes: The terminal device obtains a location of the terminal device. The terminal device determines, based on the location of the terminal device and the reference location of the first region, a reference location of a region in which the terminal device is located, so that the terminal device performs communication based on the region in which the terminal device is located.

In a possible design, the method further includes: The terminal device obtains a region identifier. That the terminal device determines the reference location of the first region based on the first parameter and the first mapping relationship includes: determining the reference location of the first region based on the region identifier, the first parameter, and the first mapping relationship, where the first region is a region corresponding to the region identifier, so that the terminal device performs communication based on the region corresponding to the region identifier.

In a possible design, the first parameter indicates a first quantity of regions. For example, the first quantity of regions is N, and the first region is a region in N regions.

In a possible design, the first parameter indicates a first region radius.

In a possible design, the first parameter indicates a first region level, where the first region level and a second parameter are for determining a first quantity of regions, and the second parameter is a second quantity of regions. The second parameter may be understood as a reference parameter.

For example, when the first region level indicated by the first parameter is *k*, the first quantity of regions satisfies *N*_{*spot*_*k*} = *k* × *N*_{*spot*_*base*}. *N*_{*spot*_*k*} represents the first quantity of regions, *k* represents an identifier of the first region level, and *N*_{*spot*_*base*} represents the second quantity of regions.

In a possible design, the first parameter indicates a first region level, where the first region level and a second parameter are for determining a first region radius, and the second parameter is a second region radius. The second parameter may be understood as a reference parameter.

For example, when the first region level indicated by the first parameter is *k*, the first region radius satisfies *R*_{*spot*_*k*} = *k* × *R*_{*spot*_*base*}. *R*_{*spot*_*k*} represents the first region radius, *k* represents an identifier of the first region level, and *R*_{*spot*_*base*} represents the second region radius.

In a possible design, a larger beam steering angle indicates a smaller quantity of regions that is indicated by the first parameter.

For example, a beam steering angle of a beam 1 is an angle 1, and a beam steering angle of a beam 2 is an angle 2. A first parameter corresponding to the beam 1 indicates a quantity 1 of regions, and a first parameter corresponding to the beam 2 indicates a quantity 2 of regions. The angle 1 is greater than the angle 2, and the quantity 1 of regions is less than the quantity 2 of regions.

In a possible design, a larger beam steering angle indicates a larger region radius indicated by the first parameter.

For example, a beam steering angle of a beam 1 is an angle 1, and a beam steering angle of a beam 2 is an angle 2. A first parameter corresponding to the beam 1 indicates a region radius 1, and a first parameter corresponding to the beam 2 indicates a region radius 2. The angle 1 is greater than the angle 2, and the region radius 1 is greater than the region radius 2.

In a possible design, the method further includes: The terminal device receives a third parameter, where the third parameter indicates at least one angle range, and each of the at least one angle range corresponds to one fourth parameter. The terminal device obtains a first angle, where the first angle is an elevation angle of the terminal device or a beam steering angle corresponding to the terminal device. That the terminal device determines the first parameter includes: determining, based on the at least one angle range and the first angle, the first parameter from the fourth parameter corresponding to the at least one angle range.

In other words, if the terminal device receives relevant parameters corresponding to a plurality of region levels, for example, at least one fourth parameter, the terminal device may perform selection based on the first angle, and perform computing based on the selected first parameter, without performing computing for a parameter corresponding to each region level, to help reduce operation complexity on a terminal device side.

In a possible design, the method further includes: The terminal device receives a third parameter, where the third parameter indicates at least one geographic range, and each of the at least one geographic range corresponds to one fourth parameter. The terminal device obtains the location of the terminal device. That the terminal device determines the first parameter includes: determining, based on the at least one geographic range and the location of the terminal device, the first parameter from the fourth parameter corresponding to the at least one geographic range.

In other words, if the terminal device receives relevant parameters corresponding to a plurality of region levels, for example, at least one fourth parameter, the terminal device may perform selection based on the location of the terminal device, and perform computing based on the selected first parameter, without performing computing for a parameter corresponding to each region level, to help reduce operation complexity on a terminal device side.

In a possible design, the first mapping relationship satisfies: $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot _ k}}\right)$ where *RL*(*k,i*) represents three-dimensional coordinates corresponding to the reference location of the first region, *k* represents an identifier of the first region level, *i* represents the region identifier of the first region, i is a non-negative integer less than *N*_{*spot*_*k*}, *Rₑ* represents a parameter of an earth surface on which the first region is located, *N*_{*spot*_*k*} represents the first quantity of regions, and [ ] represents a fractional part operator.

In a possible design, the first mapping relationship satisfies: $RL \left(k, i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot _ k}} - 1$ $∅ = \frac{1 + \sqrt{5}}{2}$ where *RL*(*k,i*) represents three-dimensional coordinates corresponding to the reference location of the first region, *k* represents an identifier of the first region level, *i* represents the region identifier of the first region, i is a non-negative integer less than *N*_{*spot*_*k*}, *Rₑ* represents a parameter of an earth surface on which the first region is located, and *N*_{*spot*_*k*} represents the first quantity of regions.

In a possible design, the first mapping relationship satisfies: $RL \left(k, i\right) = \left(lon\left(k, i\right),lat\left(k, i\right)\right)$ $lon \left(k, i\right) = {sin}^{- 1} \left(\frac{2 i}{2 N + 1}\right)$ $lat \left(k, i\right) = 2 πi {∅}^{- 1}$ ${N}_{spot _ k} = 2 N + 1$ $∅ = \frac{1 + \sqrt{5}}{2}$ where *RL*(*k,i*) represents the reference location of the first region, *lon*(*k,i*) represents a longitude corresponding to the reference location of the first region, *lat*(*k,i*) represents a latitude corresponding to the reference location of the first region, *k* represents an identifier of the first region level, i represents the region identifier of the first region, i is a non-negative integer less than *N*_{*spot*_*k*}, and *N*_{*spot*_*k*} represents the first quantity of regions.

In a possible design, the method further includes: The terminal device receives indication information of a first offset. That the terminal device determines the reference location of the first region based on the first parameter and the first mapping relationship includes: determining the reference location of the first region based on the first offset, the first parameter, and the first mapping relationship, so that the reference location that is of the first region and that is determined by the terminal device is more accurate.

In a possible design, the first region includes at least one of the following types: a broadcast region or a service region. The broadcast region is a geographic region covered by a broadcast beam. The service region is a geographic region covered by a traffic beam.

In a possible design, the first region is the broadcast region, and the first region is the region in which the terminal device is located; and the method further includes: The terminal device receives access information, where the access information indicates an access configuration corresponding to the first region. The terminal device initiates random access based on the access configuration corresponding to the first region.

In this way, the terminal device obtains a region-level access configuration (for example, the access configuration for the first region). If the region in which the terminal device is located is the first region, the terminal device initiates the random access based on the access configuration for the region in which the terminal device is located, to reduce signaling overheads. In addition, compared with a related technology of performing cell-based random access, this application can enable the terminal device to initiate the random access more flexibly.

In a possible design, the first region is the service region, and the first region is the region in which the terminal device is located; and the method further includes: The terminal device receives service resource information, where the service resource information indicates a communication resource configuration corresponding to the first region. The terminal device performs service transmission based on the communication resource configuration corresponding to the first region.

In this way, the terminal device obtains a region-level communication resource configuration (for example, the communication resource configuration for the first region). If the region in which the terminal device is located is the first region, the terminal device performs service transmission based on the communication resource configuration for the region in which the terminal device is located, to reduce signaling overheads. In addition, compared with a related technology of performing cell-based service transmission, this application can enable the terminal device to perform service transmission more flexibly.

In a possible design, the method further includes: The terminal device triggers neighboring cell measurement or sends a neighboring cell measurement result based on the reference location of the first region and the location of the terminal device, where the neighboring cell measurement result is for cell handover or cell reselection.

In this way, in terms of the neighboring cell measurement, if the reference location of the first region is a reference point, the terminal device determines, based on the reference location of the first region and the location of the terminal device, whether to trigger the neighboring cell measurement. This causes low signaling overheads. In addition, compared with a related technology in which neighboring cell measurement is triggered based on a cell-level reference location, this application can enable the terminal device to trigger the neighboring cell measurement more flexibly.

In terms of the neighboring cell measurement result, if the reference location of the first region is a reference point, the terminal device determines, based on the reference location of the first region and the location of the terminal device, whether to send the neighboring cell measurement result. This causes low signaling overheads. In addition, compared with a related technology in which sending of a neighboring cell measurement result is triggered based on a cell-level reference location, this application can enable the terminal device to trigger the sending of the neighboring cell measurement result more flexibly.

In a possible design, the method further includes: The terminal device receives indication information of a first threshold.

That the terminal device triggers the neighboring cell measurement based on the reference location of the first region and the location of the terminal device includes: triggering the neighboring cell measurement when a distance between the reference location of the first region and the location of the terminal device is greater than or equal to the first threshold, so that the terminal device triggers the neighboring cell measurement in a timely and accurate manner.

That the terminal device sends the neighboring cell measurement result based on the reference location of the first region and the location of the terminal device includes: sending the neighboring cell measurement result when a distance between the reference location of the first region and the location of the terminal device is greater than or equal to the first threshold, so that the terminal device triggers the sending of the neighboring cell measurement result in a timely and accurate manner.

In a possible design, the method further includes: The terminal device triggers cell handover based on the reference location of the first region, the location of the terminal device, and signal quality of a neighboring cell.

In this way, if the reference location of the first region is a reference point, the terminal device determines, based on the reference location of the first region, the location of the terminal device, and the signal quality of the neighboring cell, whether to trigger the cell handover. This causes low signaling overheads. In addition, compared with a related technology in which cell handover is triggered based on a cell-level reference location, this application can enable the terminal device to trigger the cell handover more flexibly.

In a possible design, the method further includes: The terminal device receives indication information of a first threshold and indication information of a second threshold.

That the terminal device triggers the cell handover based on the reference location of the first region, the location of the terminal device, and the signal quality of the neighboring cell includes: triggering the cell handover when a distance between the reference location of the first region and the location of the terminal device is greater than or equal to the first threshold and the signal quality of the neighboring cell is greater than or equal to the second threshold, so that the terminal device triggers the cell handover in a timely and accurate manner.

In a possible design, the first region is the region in which the terminal device is located, and the first region belongs to a first cell; and the method further includes: The terminal device sends an interference measurement result, where the interference measurement result indicates strength of interference from another cell to the first cell, so that the terminal device reports a region-granularity interference measurement result, and the network device performs interference coordination based on the interference measurement result.

In a possible design, the interference measurement result further indicates at least one of the following: the first region or a first time period; and the strength of interference is strength of interference from the another cell to the first cell in the first time period.

According to a second aspect, a communication method is provided. The method may be performed by a terminal device. Unless otherwise specified, the "terminal device" in this application may be the terminal device, may be a component (for example, a processor, a chip, or a chip system) in the terminal device, or may be a logical module or software that can implement all or a part of functions of the terminal device. The following provides descriptions by using an example in which the method is performed by the terminal device. The method includes:
The terminal device determines a first parameter and a second parameter, where the first parameter indicates a first beam level, each beam at the first beam level covers L regions among X regions, the first parameter is associated with an angle, the angle includes a beam steering angle or an elevation angle, and the second parameter indicates a quantity X of regions, where X and L are positive integers.

The terminal device determines a reference location of a first region based on the first beam level, the quantity of regions, and a first mapping relationship, where the first mapping relationship indicates a conversion relationship between the reference location of the first region and both the first beam level and the quantity of regions, and the first region is a region among the X regions.

In this way, because the first mapping relationship can indicate the conversion relationship between the reference location of the first region and both the first beam level and the quantity of regions, the first parameter indicates the first beam level, and the second parameter indicates the quantity of regions, when the terminal device has determined the first parameter and the second parameter, the terminal device may determine the reference location of the first region based on the first parameter, the second parameter, and the first mapping relationship.

Because the first parameter is associated with the angle, the first region may be regions covered by beams with different beam steering angles, or the first region may be regions at different elevation angles of the terminal device. To be specific, a radius of the first region may have a plurality of values. Compared with an H3 geographic grid-based method that supports only 16 region radii, this application can adapt to regions with different radii. In other words, even for regions with different radii, the terminal device may determine the reference location of the first region based on the first parameter, the second parameter, and the first mapping relationship, to improve region determining flexibility of the terminal device.

Furthermore, because the reference location of the first region may be determined by using the first parameter and the second parameter, the terminal device and a network device may interact based on the first parameter and the second parameter. A quantity of bits needed for indicating the first parameter and the second parameter is smaller than that needed for communicating a contour of a region covered by a beam, a beam-position reference location in an H3 geographic grid, or the like. Therefore, signaling overheads are lower.

In addition, the terminal device may perform communication based on the reference location of the first region. For example, when the first region is an active region of the network device, if the terminal device is located in the first region, the terminal device may communicate with the network device, to help improve communication effectiveness.

In a possible design, the method further includes: The terminal device obtains a location of the terminal device. The terminal device determines, based on the location of the terminal device and the reference location of the first region, a reference location of a region in which the terminal device is located, so that the terminal device performs communication based on the region in which the terminal device is located.

In a possible design, the method further includes: The terminal device obtains a region identifier. That the terminal device determines the reference location of the first region based on the first beam level, the quantity of regions, and the first mapping relationship includes: determining the reference location of the first region based on the region identifier, the first beam level, the quantity of regions, and the first mapping relationship, where the first region is a region corresponding to the region identifier, so that the terminal device performs communication based on the region corresponding to the region identifier.

In a possible design, that the second parameter indicates the quantity of regions includes: The second parameter includes the quantity of regions; or the second parameter includes a region radius, where the region radius is for determining the quantity of regions.

In a possible design, the method further includes: The terminal device receives a third parameter, where the third parameter indicates at least one angle range, and each of the at least one angle range corresponds to one fourth parameter. The terminal device obtains a first angle, where the first angle is an elevation angle of the terminal device or a beam steering angle corresponding to the terminal device.

That the terminal device determines the first parameter includes: determining, based on the at least one angle range and the first angle, the first parameter from the fourth parameter corresponding to the at least one angle range.

In other words, if the terminal device receives relevant parameters corresponding to a plurality of beam levels, for example, at least one fourth parameter, the terminal device may perform selection based on the first angle, and perform computing based on the selected first parameter, without performing computing for a parameter corresponding to each beam level, to help reduce operation complexity on a terminal device side.

In a possible design, the method further includes: The terminal device receives a third parameter, where the third parameter indicates at least one geographic range, and each of the at least one geographic range corresponds to one fourth parameter. The terminal device obtains the location of the terminal device.

That the terminal device determines the first parameter includes: determining, based on the at least one geographic range and the location of the terminal device, the first parameter from the fourth parameter corresponding to the at least one geographic range.

In other words, if the terminal device receives relevant parameters corresponding to a plurality of beam levels, for example, at least one fourth parameter, the terminal device may perform selection based on the location of the terminal device, and perform computing based on the selected first parameter, without performing computing for a parameter corresponding to each beam level, to help reduce operation complexity on a terminal device side.

In a possible design, the first mapping relationship satisfies: $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot}}\right)$ where *RL*(*k,i*) represents three-dimensional coordinates corresponding to the reference location of the first region, *k* represents an identifier of the first beam level, *i* represents the region identifier of the first region, i is a non-negative integer less than *Nₛₚₒₜ*, *Rₑ* represents a parameter of an earth surface on which the first region is located, *Nₛₚₒₜ* represents the quantity of regions, and [ ] represents a fractional part operator.

In a possible design, the first mapping relationship satisfies: $RL \left(k, i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot}} - 1$ $∅ = \frac{1 + \sqrt{5}}{2}$ where *RL*(*k,i*) represents three-dimensional coordinates corresponding to the reference location of the first region, *k* represents an identifier of the first beam level, *i* represents the region identifier of the first region, *i* is a non-negative integer less than *Nₛₚₒₜ*, *Rₑ* represents a parameter of an earth surface on which the first region is located, and *Nₛₚₒₜ* represents the quantity of regions.

In a possible design, the first mapping relationship satisfies: $RL \left(k, i\right) = \left(lon\left(k, i\right),lat\left(k, i\right)\right)$ $lon \left(k, i\right) = {sin}^{- 1} \left(\frac{2 i}{2 N + 1}\right)$ $lat \left(k, i\right) = 2 πi {∅}^{- 1}$ ${N}_{spot} = 2 N + 1$ $∅ = \frac{1 + \sqrt{5}}{2}$ where *RL*(*k,i*) represents the reference location of the first region, *lon*(*k,i*) represents a longitude corresponding to the reference location of the first region, *lat*(*k,i*) represents a latitude corresponding to the reference location of the first region, *k* represents an identifier of the first beam level, i represents the region identifier of the first region, i is a non-negative integer less than *Nₛₚₒₜ*, and *Nₛₚₒₜ* represents the quantity of regions.

In a possible design, the first region includes at least one of the following types: a broadcast region or a service region. The broadcast region is a geographic region covered by a broadcast beam. The service region is a geographic region covered by a traffic beam.

In a possible design, the first region is the broadcast region, the first region is the region in which the terminal device is located, and the first region is a region covered by a first beam; and the method further includes: The terminal device receives access information, where the access information indicates an access configuration corresponding to the first beam. The terminal device initiates random access based on the access configuration corresponding to the first beam.

In this way, the terminal device obtains a beam-level access configuration (for example, the access configuration for the first beam). If the region in which the terminal device is located is within coverage of the first beam, the terminal device initiates the random access based on the access configuration for the first beam, to reduce signaling overheads. In addition, compared with a related technology of performing cell-based random access, this application can enable the terminal device to initiate the random access more flexibly.

In a possible design, the first region is the service region, the first region is the region in which the terminal device is located, and the first region is a region covered by a first beam; and the method further includes: The terminal device receives service resource information, where the service resource information indicates a communication resource configuration corresponding to the first beam. The terminal device performs service transmission based on the communication resource configuration corresponding to the first beam.

In this way, the terminal device obtains a beam-level communication resource configuration (for example, the communication resource configuration for the first beam). If the region in which the terminal device is located is within coverage of the first beam, the terminal device performs service transmission based on the communication resource configuration for the first beam, to reduce signaling overheads. In addition, compared with a related technology of performing cell-based service transmission, this application can enable the terminal device to perform service transmission more flexibly.

In a possible design, the first region is the region covered by the first beam; and the method further includes: The terminal device triggers neighboring cell measurement or sends a neighboring cell measurement result based on a reference location of the first beam and the location of the terminal device, where the neighboring cell measurement result is for cell handover or cell reselection.

In this way, in terms of the neighboring cell measurement, if the reference location of the first beam is a reference point, the terminal device determines, based on the reference location of the first beam and the location of the terminal device, whether to trigger the neighboring cell measurement. This causes low signaling overheads. In addition, compared with a related technology in which neighboring cell measurement is triggered based on a cell-level reference location, this application can enable the terminal device to trigger the neighboring cell measurement more flexibly.

In terms of the neighboring cell measurement result, if the reference location of the first beam is a reference point, the terminal device determines, based on the reference location of the first beam and the location of the terminal device, whether to send the neighboring cell measurement result. This causes low signaling overheads. In addition, compared with a related technology in which sending of a neighboring cell measurement result is triggered based on a cell-level reference location, this application can enable the terminal device to trigger the sending of the neighboring cell measurement result more flexibly.

In a possible design, the method further includes: The terminal device receives indication information of a first threshold.

That the terminal device triggers the neighboring cell measurement based on the reference location of the first beam and the location of the terminal device includes: triggering the neighboring cell measurement when a distance between the reference location of the first beam and the location of the terminal device is greater than or equal to the first threshold, so that the terminal device triggers the neighboring cell measurement in a timely and accurate manner.

That the terminal device sends the neighboring cell measurement result based on the reference location of the first beam and the location of the terminal device includes: sending the neighboring cell measurement result when a distance between the reference location of the first beam and the location of the terminal device is greater than or equal to the first threshold, so that the terminal device triggers the sending of the neighboring cell measurement result in a timely and accurate manner.

In a possible design, the first region is the region covered by the first beam; and the method further includes: The terminal device triggers cell handover based on a reference location of the first beam, the location of the terminal device, and signal quality of a neighboring cell.

In this way, if the reference location of the first beam is a reference point, the terminal device determines, based on the reference location of the first beam, the location of the terminal device, and the signal quality of the neighboring cell, whether to trigger the cell handover. This causes low signaling overheads. In addition, compared with a related technology in which cell handover is triggered based on a cell-level reference location, this application can enable the terminal device to trigger the cell handover more flexibly.

In a possible design, the method further includes: The terminal device receives indication information of a first threshold and indication information of a second threshold.

That the terminal device triggers the cell handover based on the reference location of the first beam, the location of the terminal device, and the signal quality of the neighboring cell includes: triggering the cell handover when a distance between the reference location of the first beam and the location of the terminal device is greater than or equal to the first threshold and the signal quality of the neighboring cell is greater than or equal to the second threshold, so that the terminal device triggers the cell handover in a timely and accurate manner.

In a possible design, the reference location of the first beam is the reference location of the first region. Alternatively, the reference location of the first beam is determined based on a reference location of each region covered by the first beam.

In a possible design, the first region is the region in which the terminal device is located, and the first region belongs to a first cell; and the method further includes: The terminal device sends an interference measurement result, where the interference measurement result represents strength of interference from another cell to the first cell, so that the network device performs interference coordination based on the interference measurement result.

In a possible design, the interference measurement result further indicates at least one of the following: the first beam or a first time period; and the first region is the region covered by the first beam, and the strength of interference is strength of interference from the another cell to the first cell in the first time period.

In a possible design, the method further includes: The terminal device obtains the first mapping relationship, where the first mapping relationship indicates the region covered by the first beam, and the region covered by the first beam includes the first region.

In a possible design, the first region is the broadcast region, the first region is the region in which the terminal device is located, and the first region is a region covered by a first cell; and the method further includes: The terminal device receives access information, where the access information indicates an access configuration corresponding to the first cell. The terminal device initiates random access based on the access configuration corresponding to the first cell.

In this way, the terminal device obtains a cell-level access configuration (for example, the access configuration for the first cell). If the region in which the terminal device is located belongs to the first cell, the terminal device initiates the random access based on the access configuration for the cell in which the terminal device is located, to reduce signaling overheads.

In a possible design, the first region is the service region, the first region is the region in which the terminal device is located, and the first region is a region covered by a first cell; and the method further includes: The terminal device receives service resource information, where the service resource information indicates a communication resource configuration corresponding to the first cell. The terminal device performs service transmission based on the communication resource configuration corresponding to the first cell.

In this way, the terminal device obtains a cell-level communication resource configuration (for example, the communication resource configuration for the first cell). If the region in which the terminal device is located belongs to the first cell, the terminal device performs service transmission based on the communication resource configuration for the cell in which the terminal device is located, to reduce signaling overheads.

In a possible design, the first region is the region in which the terminal device is located, and the first region is the region covered by the first cell; and the method further includes: The terminal device triggers neighboring cell measurement or sends a neighboring cell measurement result based on a reference location of the first cell and the location of the terminal device, where the neighboring cell measurement result is for cell handover or cell reselection.

In this way, in terms of neighboring cell measurement, if the reference location of the first cell is a reference point, the terminal device determines, based on the reference location of the first cell and the location of the terminal device, whether to trigger the neighboring cell measurement. This causes low signaling overheads.

In terms of the neighboring cell measurement result, if the reference location of the first cell is a reference point, the terminal device determines, based on the reference location of the first cell and the location of the terminal device, whether to send the neighboring cell measurement result. This causes low signaling overheads.

In a possible design, the method further includes: The terminal device receives indication information of a first threshold.

That the terminal device triggers the neighboring cell measurement based on the reference location of the first cell and the location of the terminal device includes: triggering the neighboring cell measurement when a distance between the reference location of the first cell and the location of the terminal device is greater than or equal to the first threshold, so that the terminal device triggers the neighboring cell measurement in a timely and accurate manner.

That the terminal device sends the neighboring cell measurement result based on the reference location of the first cell and the location of the terminal device includes: sending the neighboring cell measurement result when a distance between the reference location of the first cell and the location of the terminal device is greater than or equal to the first threshold, so that the terminal device triggers the sending of the neighboring cell measurement result in a timely and accurate manner.

In a possible design, the first region is the region in which the terminal device is located, and the first region is the region covered by the first cell; and the method further includes: The terminal device triggers cell handover based on the reference location of the first cell, the location of the terminal device, and signal quality of a neighboring cell.

In this way, if the reference location of the first cell is a reference point, the terminal device determines, based on the reference location of the first cell, the location of the terminal device, and the signal quality of the neighboring cell, whether to trigger the cell handover. This causes low signaling overheads.

In a possible design, the method further includes: The terminal device receives indication information of a first threshold and indication information of a second threshold.

That the terminal device triggers the cell handover based on the reference location of the first cell, the location of the terminal device, and the signal quality of the neighboring cell includes: triggering the cell handover when a distance between the reference location of the first cell and the location of the terminal device is greater than or equal to the first threshold and the signal quality of the neighboring cell is greater than or equal to the second threshold, so that the terminal device triggers the cell handover in a timely and accurate manner.

In a possible design, the reference location of the first cell is the reference location of the first region. Alternatively, the reference location of the first cell is determined based on a reference location of each region covered by the first cell.

In a possible design, the method further includes: The terminal device obtains a second mapping relationship, where the second mapping relationship indicates the region covered by the first cell, and the region covered by the first cell includes the first region.

According to a third aspect, a communication method is provided. The method may be performed by a first network device. Unless otherwise specified, the "first network device" in this application may be the first network device, may be a component (for example, a processor, a chip, or a chip system) in the first network device, or may be a logical module or software that can implement all or a part of functions of the first network device. The following provides descriptions by using an example in which the method is performed by the first network device. The method includes:
The first network device determines a first parameter, where the first parameter is associated with an angle, and the angle includes a beam steering angle or an elevation angle. The first network device sends the first parameter, where the first parameter is for determining a reference location of a first region.

In a possible design, the first parameter indicates a first quantity of regions.

In a possible design, the first parameter indicates a first region radius.

In a possible design, the first parameter indicates a first region level, where the first region level and a second parameter are for determining a first quantity of regions, and the second parameter is a second quantity of regions.

In a possible design, the first parameter indicates a first region level, where the first region level and a second parameter are for determining a first region radius, and the second parameter is a second region radius.

In a possible design, a larger beam steering angle indicates a smaller quantity of regions that is indicated by the first parameter.

In a possible design, a larger beam steering angle indicates a larger region radius indicated by the first parameter.

In a possible design, the method further includes: The first network device sends a third parameter, where the third parameter indicates at least one angle range, and the at least one angle range is for determining the first parameter.

In a possible design, the method further includes: The first network device sends a third parameter, where the third parameter indicates at least one geographic range, and the at least one geographic range is for determining the first parameter.

In a possible design, the method further includes: The first network device sends indication information of a first offset, where the first offset is for determining the reference location of the first region.

In a possible design, the first region includes at least one of the following types: a broadcast region or a service region. The broadcast region is a geographic region covered by a broadcast beam. The service region is a geographic region covered by a traffic beam.

In a possible design, the method further includes: The first network device sends access information, where the access information indicates an access configuration corresponding to the first region.

In a possible design, the method further includes: The first network device sends service resource information, where the service resource information indicates a communication resource configuration corresponding to the first region.

In a possible design, the method further includes: The first network device sends indication information of a first threshold, where the first threshold is for triggering neighboring cell measurement, triggering sending of a neighboring cell measurement result, or triggering cell handover.

In a possible design, the first region belongs to a first cell; and the method further includes: The first network device receives an interference measurement result, where the interference measurement result indicates strength of interference from another cell to the first cell.

In a possible design, the interference measurement result further indicates at least one of the following: the first region or a first time period; and the strength of interference is strength of interference from the another cell to the first cell in the first time period.

According to a fourth aspect, a communication method is provided. The method may be performed by a first network device. Unless otherwise specified, the "first network device" in this application may be the first network device, may be a component (for example, a processor, a chip, or a chip system) in the first network device, or may be a logical module or software that can implement all or a part of functions of the first network device. The following provides descriptions by using an example in which the method is performed by the first network device. The method includes:
The first network device determines a first parameter and a second parameter, where the first parameter indicates a first beam level, each beam at the first beam level covers L regions among X regions, the first parameter is associated with an angle, the angle includes a beam steering angle or an elevation angle, and the second parameter indicates a quantity X of regions, where X and L are positive integers.

The first network device sends the first parameter and the second parameter, where the first parameter and the second parameter are for determining a reference location of a first region, and the first region is a region among the X regions.

In a possible design, that the second parameter indicates the quantity of regions includes: The second parameter includes the quantity of regions; or the second parameter includes a region radius, where the region radius is for determining the quantity of regions.

In a possible design, the method further includes: The first network device sends a third parameter, where the third parameter indicates at least one angle range, and the at least one angle range is for determining the first parameter.

In a possible design, the method further includes: The first network device sends a third parameter, where the third parameter indicates at least one geographic range, and the at least one geographic range is for determining the first parameter.

In a possible design, the first region includes at least one of the following types: a broadcast region or a service region. The broadcast region is a geographic region covered by a broadcast beam. The service region is a geographic region covered by a traffic beam.

In a possible design, the method further includes: The first network device sends access information, where the access information indicates an access configuration corresponding to a first beam.

In a possible design, the method further includes: The first network device sends service resource information, where the service resource information indicates a communication resource configuration corresponding to a first beam.

In a possible design, the method further includes: The first network device sends indication information of a first threshold, where the first threshold is for triggering neighboring cell measurement, triggering sending of a neighboring cell measurement result, or triggering cell handover.

In a possible design, the first region belongs to a first cell; and the method further includes: The first network device receives an interference measurement result, where the interference measurement result represents strength of interference from another cell to the first cell, so that the first network device performs interference coordination based on the interference measurement result.

In a possible design, the interference measurement result further indicates at least one of the following: the first beam or a first time period; and the first region is a region covered by the first beam, and the strength of interference is strength of interference from the another cell to the first cell in the first time period.

In a possible design, the method further includes: The first network device sends a first mapping relationship, where the first mapping relationship indicates the region covered by the first beam, and the region covered by the first beam includes the first region.

In a possible design, the first region is a region covered by a first cell; and the method further includes: The first network device sends access information, where the access information indicates an access configuration corresponding to the first cell.

In a possible design, the first region is a region covered by a first cell; and the method further includes: The first network device sends service resource information, where the service resource information indicates a communication resource configuration corresponding to the first cell.

In a possible design, the method further includes: The first network device sends a second mapping relationship, where the second mapping relationship indicates the region covered by the first cell, and the region covered by the first cell includes the first region.

According to a fifth aspect, a communication method is provided. The method may be performed by a first network device. Unless otherwise specified, the "first network device" in this application may be the first network device, may be a component (for example, a processor, a chip, or a chip system) in the first network device, or may be a logical module or software that can implement all or a part of functions of the first network device. The following provides descriptions by using an example in which the method is performed by the first network device. The method includes:
The first network device determines first information, where the first information indicates to release a communication resource for a first region or a first beam; or the first information indicates to activate a communication resource for a second region or a second beam. The first network device sends the first information.

A satellite is characterized by progressive handover. For example, a coverage region of the first network device moves into the first region, and a coverage region of a second network device moves out of the first region. This means that the second network device needs to release the communication resource for the first region. Therefore, the first information can indicate the second network device to release the communication resource for the first region, to implement information exchange between network devices in an incremental update manner, and therefore implement mobility management or interference coordination.

The first region may be a region covered by the first beam. The first information may alternatively indicate to release the communication resource for the first beam, to indicate the second network device to release the communication resource for the first beam.

Similarly, a satellite is characterized by progressive handover. For example, a coverage region of the first network device moves out of the second region, and a coverage region of a second network device moves into the second region. This means that the second network device needs to activate the communication resource for the second region. Therefore, the first information can indicate the second network device to activate the communication resource for the second region, to implement information exchange between network devices in an incremental update manner, and therefore implement mobility management or interference coordination.

The second region may be a region covered by the second beam. The first information may alternatively indicate to activate the communication resource for the second beam, to indicate the second network device to release the communication resource for the second beam.

According to a sixth aspect, a communication method is provided. The method may be performed by a second network device. Unless otherwise specified, the "second network device" in this application may be the second network device, may be a component (for example, a processor, a chip, or a chip system) in the second network device, or may be a logical module or software that can implement all or a part of functions of the second network device. The following provides descriptions by using an example in which the method is performed by the second network device. The method includes:
The second network device receives first information, where the first information indicates to release a communication resource for a first region or a first beam; or the first information indicates to activate a communication resource for a second region or a second beam.

When the first information indicates to release the communication resource for the first region or the first beam, the second network device releases the communication resource indicated by the first information.

When the first information indicates to activate the communication resource for the second region or the second beam, the second network device activates the communication resource indicated by the first information.

According to a seventh aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to an eighth aspect, a communication apparatus is provided, and includes a processor and a memory. The processor is coupled to the memory, and the memory stores program instructions; and when the program instructions stored in the memory are executed by the processor, the communication apparatus is caused to perform the method according to any one of the foregoing aspects or the possible designs of the foregoing aspects.

According to a ninth aspect, a communication apparatus is provided, and includes a processor. The processor is configured to execute a computer program or instructions, to cause the communication apparatus to perform the method according to any one of the foregoing aspects or the possible designs of the foregoing aspects. Optionally, the communication apparatus further includes a memory. The memory may be coupled to the processor. Alternatively, the memory may be independent of the processor. For example, the memory and the processor are two independent modules. The memory may be outside the communication apparatus, or may be inside the communication apparatus.

According to a tenth aspect, a computer-readable storage medium is provided. The computer-readable storage medium stores a computer program or instructions. When the computer program or the instructions are run, the method according to any one of the foregoing aspects or the possible designs of the foregoing aspects is performed.

According to an eleventh aspect, a computer program product including instructions is provided. When the computer program product runs, the method according to any one of the foregoing aspects or the possible designs of the foregoing aspects is performed.

The communication apparatus provided in any one of the seventh aspect to the eleventh aspect may be the terminal device in the first aspect or the second aspect or a component, for example, a chip or a chip system, included in the terminal device. Alternatively, the communication apparatus may be the first network device in the third aspect, the fourth aspect, or the fifth aspect or a component, for example, a chip or a chip system, included in the first network device. Alternatively, the communication apparatus may be the second network device in the sixth aspect or a component, for example, a chip or a chip system, included in the second network device. When the apparatus is a chip system, the apparatus may include a chip, or may include a chip and another discrete component.

It can be understood that when the communication apparatus provided in any one of the seventh aspect to the eleventh aspect is a chip, a sending action/function of the communication apparatus may be understood as outputting information, and a receiving action/function of the communication apparatus may be understood as inputting information.

According to a twelfth aspect, a communication apparatus is provided, and is configured to implement the method according to any one of the foregoing aspects or the possible designs of the foregoing aspects. Optionally, the communication apparatus includes a terminal device, a first network device, a second network device, a chip system, or a chip.

For technical effects brought by any one of the design schemes of the seventh aspect to the twelfth aspect, refer to the technical effects brought by different design schemes of the first aspect, the second aspect, and the fifth aspect. Details are not described herein again.

### BRIEF DESCRIPTION OF DRAWINGS

FIG. 1 is a diagram of an architecture of a satellite network in a transparent mode according to this application;
FIG. 2 is a diagram of an architecture of a satellite network in a regenerative mode according to this application;
FIG. 3 is a diagram of another architecture of a satellite network in a regenerative mode according to this application;
FIG. 4 is a diagram of still another architecture of a satellite network in a regenerative mode according to this application;
FIG. 5 is a diagram of a network architecture that integrates an NTN with a terrestrial network according to this application;
FIG. 6a and FIG. 6b are diagrams of beam coverage in an earth-moving mode and an earth-fixed mode in an NTN according to this application;
FIG. 7a is a diagram of a mapping relationship between a beam steering angle and a beam size according to this application;
FIG. 7b is a diagram of a beam steering angle and an elevation angle according to this application;
FIG. 8a and FIG. 8b are diagrams of mapping relationships between a beam and a region according to this application;
FIG. 9a and FIG. 9b are diagrams of projections of beams on the ground according to this application;
FIG. 10 is a diagram based on an H3 geographic grid according to this application;
FIG. 11 is a diagram of a group handover scenario according to this application;
FIG. 12 is a schematic flowchart of beam management according to this application;
FIG. 13 is a schematic flowchart of a communication method according to this application;
FIG. 14 is a diagram of another mapping relationship between a beam and a region according to this application;
FIG. 15 is a schematic flowchart of another communication method according to this application;
FIG. 16a is a schematic flowchart of still another communication method according to this application;
FIG. 16b is a diagram of still another mapping relationship between a beam and a region according to this application;
FIG. 17 is a schematic flowchart of still another communication method according to this application;
FIG. 18 is a schematic flowchart of still another communication method according to this application;
FIG. 19 is a schematic flowchart of still another communication method according to this application;
FIG. 20 is a schematic flowchart of still another communication method according to this application;
FIG. 21a is a schematic flowchart of still another communication method according to this application;
FIG. 21b is a diagram of still another mapping relationship between a beam and a region according to this application;
FIG. 22 is a schematic flowchart of still another communication method according to this application;
FIG. 23 is a schematic flowchart of still another communication method according to this application;
FIG. 24a is a schematic flowchart of still another communication method according to this application;
FIG. 24b is a diagram of a reference location of a beam according to this application;
FIG. 25 is a schematic flowchart of still another communication method according to this application;
FIG. 26 is a diagram of still another mapping relationship between a beam and a region according to this application;
FIG. 27 is a diagram of a structure of a communication apparatus according to this application;
FIG. 28 is a diagram of a structure of another communication apparatus according to this application; and
FIG. 29 is a diagram of a structure of still another communication apparatus according to this application.

### DESCRIPTION OF EMBODIMENTS

The following describes technical solutions of this application with reference to the accompanying drawings.

In the descriptions of this application, unless otherwise specified, "/" indicates that associated objects are in an "or" relationship. For example, A/B may represent A or B. "And/or" in this application merely describes an association relationship between associated objects, and indicates that three relationships may exist. For example, A and/or B may indicate three cases: Only A exists, both A and B exist, or only B exists, where A and B may be singular or plural.

In the descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one (piece) of a, b, or c may represent a, b, c, a and b, a and c, b and c, or a, b, and c.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, words such as "example" or "for example" represent giving an example, an illustration, or a description. Any embodiment or design scheme described as an "example" or "for example" in embodiments of this application should not be explained as being more preferred or advantageous than another embodiment or design scheme. Exactly, use of the words such as "example" or "for example" is intended to present a related concept in a specific manner, to facilitate understanding.

It can be understood that an "embodiment" used throughout this specification means that particular features, structures, or characteristics related to this embodiment are included in at least one embodiment of this application. Therefore, embodiments in this entire specification are not necessarily a same embodiment. In addition, these particular features, structures, or characteristics may be combined in one or more embodiments in any appropriate manner. It can be understood that sequence numbers of processes do not mean execution sequences in various embodiments of this application. The execution sequences of the processes should be determined based on functions and internal logic of the processes, and should not be construed as any limitation on implementation processes of embodiments of this application.

It can be understood that, in this application, "when" and "if" mean that corresponding processing is performed in an objective situation instead of a limited time, do not require a determining action during implementation, and do not mean any other limitation.

It can be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, an apparatus provided in embodiments of this application may also correspondingly implement these features or functions. Details are not described herein.

In this application, unless otherwise specified, for same or similar parts in embodiments, refer to each other. In embodiments of this application and implementations/implementation methods in embodiments, unless otherwise specified or a logical conflict occurs, terms and/or descriptions in different embodiments and in the implementations/implementation methods in embodiments are consistent and may be mutually referenced. Technical features in the different embodiments and the implementations/implementation methods in embodiments may be combined to form a new embodiment, implementation, or implementation method based on an internal logical relationship thereof. The following implementations of this application are not intended to limit the protection scope of this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

The technical solutions in embodiments of this application may be applied to non-terrestrial network (non-terrestrial network, NTN) systems such as a satellite communication system, high altitude platform station (high altitude platform station, HAPS) communication, and an unmanned aerial vehicle. For example, the technical solutions may be applied to an integrated communication and navigation (integrated communication and navigation, ICAN) system and a global navigation satellite system (global navigation satellite system, GNSS). These NTN systems may be standalone, or may be integrated with a conventional terrestrial mobile communication system, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a device-to-device (device-to-device, D2D) communication system, a machine-to-machine (machine-to-machine, M2M) communication system, an internet of things (internet of things, IoT) communication system, an internet of vehicles communication system, and a future mobile communication system.

The foregoing communication systems usable in this application are merely examples for description, and communication systems usable in and communication scenarios applicable to this application are not limited thereto. The communication systems and the communication scenarios provided in this application do not constitute any limitation on the solutions of this application. This is uniformly described herein, and details are not described below again.

In a possible implementation, a communication system usable in the solutions of this application may include at least one terminal device and at least one network device. For example, communication may be performed between terminal devices, between the terminal device and the network device, and between network devices in a wired or wireless manner.

Optionally, the terminal device may be a user-side device having a wireless transceiver function, or may be a chip or a chip system disposed in the device. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in an internet of things (internet of things, IoT), vehicle-to-everything (vehicle-to-everything, V2X), D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on water (for example, on a ship); or may be deployed in air (for example, on an airplane, a balloon, and a satellite).

For example, the terminal device may be an unmanned aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as a wearable intelligent device), a tablet computer or a computer having a wireless transceiver function, a virtual reality (virtual reality, VR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an unmanned aerial vehicle having an unmanned aerial vehicle (unmanned aerial vehicle, UAV)-to-unmanned aerial vehicle (UAV-to-UAV, U2U) communication capability. The terminal device may be mobile or fixed. This is not specifically limited in this application.

Optionally, the network device may be a network-side device having a wireless transceiver function, or may be a chip, a chip system, or a module disposed in the device. The network device is in a radio access network (radio access network, RAN) of a mobile communication system, and is configured to provide an access service to the terminal device.

In a possible implementation, the network device may be a wireless relay node or a wireless backhaul node. For example, the network device may serve as a layer 1 relay device to regenerate a physical layer signal (to be specific, perform radio frequency filtering, frequency conversion, and amplification), without another upper protocol layer.

In another possible implementation, the network device may implement all or part of functions of a base station. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; may be a next-generation NodeB (next-generation NodeB, gNodeB or gNB) in a 5G system; may be a transmission reception point (transmission reception point, TRP); may be a base station in a future evolved PLMN; or may be a device that implements a function of a base station in IoT, V2X, D2D, or M2M.

Alternatively, the network device may be a central unit (central unit, CU), a distributed unit (distributed unit, DU), a CU and a DU, a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of a software module and a hardware module.

For example, the base station in embodiments of this application may include base stations in various forms, for example, a macro base station, a micro base station (also referred to as a small cell), a relay station, and an access point. This is not specifically limited in embodiments of this application.

Optionally, the network device in embodiments of this application may be deployed on a non-terrestrial platform, for example, deployed on a low altitude platform (for example, an unmanned aerial vehicle), a high-altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Usually, the NTN gateway is deployed on the ground. The NTN gateway may communicate with the satellite, and a link between the satellite and the NTN gateway may be referred to as a feeder link (feeder link).

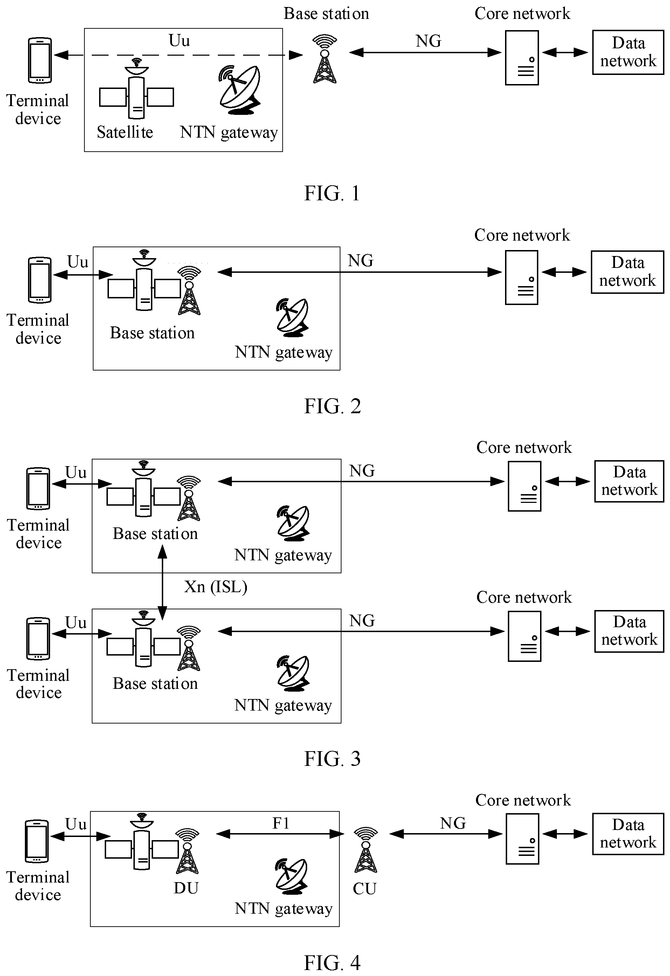

As shown in FIG. 1, when the satellite serves as a wireless relay node, in other words, the satellite has a relay and forwarding function, the NTN gateway has functions of a base station or a part of the functions of the base station. In this case, the NTN gateway may serve as a base station. Alternatively, the NTN gateway and a base station may be separately deployed. To be specific, in addition to the NTN gateway, the communication system further includes a satellite base station deployed on the ground. In FIG. 1, an example in which the NTN gateway and the base station are separately deployed is used for description.

As shown in FIG. 2, when the satellite can implement all or part of functions of a base station, the satellite has a data processing capability, and the satellite may serve as a base station. In this case, the NTN gateway and the satellite may communicate user plane data of the terminal device through a satellite radio interface (satellite radio interface, SRI).

In addition, when the satellite can implement all or part of functions of a base station, as shown in FIG. 3, there is an inter-satellite link (inter-satellite link, ISL) between different satellites, and the satellites may communicate with each other through the ISL. Alternatively, as shown in FIG. 4, the satellite may have a processing function of a DU of a base station, in other words, the satellite can serve as a DU. In this scenario, a processing function of a CU of the base station may be deployed on the ground, and the CU and the DU communicate with each other via the NTN gateway through an F1 interface.

In the architectures shown in FIG. 1 to FIG. 4, NG represents an interface between a base station and a core network. Uu represents an interface between a base station and the terminal device. Xn represents an interface between base stations. It can be understood that, with evolution of the communication system, a name of the interface between the base station and the core network, a name of the interface between the base station and the terminal device, and a name of the interface between the base stations may also change. This is not specifically limited in this application.

Optionally, when the satellite serves as a wireless relay node and has a relay and forwarding function, it may be considered that the satellite operates in a transparent (transparent) mode. When the satellite has a data processing capability and can implement all or part of functions of a base station, it may be considered that the satellite operates in a regenerative (regenerative) mode. A specific satellite may support only the transparent mode or only the regenerative mode; or may support the transparent mode and the regenerative mode, and can switch between the transparent mode and the regenerative mode.

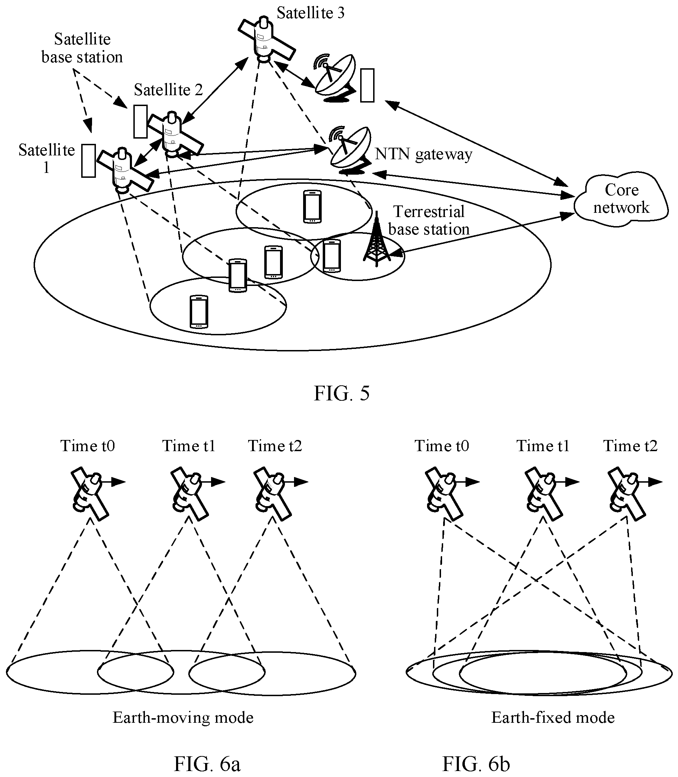

In some implementation scenarios, an NTN and a terrestrial network may be integrated. For example, FIG. 5 shows a network architecture that integrates an NTN with a terrestrial network according to an embodiment of this application. In the architecture shown in FIG. 5, a satellite 1 and a satellite 2 operate in a regenerative mode, and the satellites may serve as NTN base stations, or NTN base stations may be deployed on the satellites. A satellite 3 operates in a transparent mode. Therefore, an additional NTN base station needs to be deployed. The NTN base station is a base station in the NTN.

In addition, the architecture may further include a terrestrial base station, and the terrestrial base station is a base station in the terrestrial network. The NTN base station and the terrestrial base station may be interconnected through a common core network. As a bearer network, the core network provides an interface to a data network, provides communication connection, authentication, management, and policy control for a terminal device, bears a data service, and so on. For example, the core network may include an access and mobility management function (access and mobility management function, AMF) network element, a session management function (session management function, SMF) network element, an authentication server function (authentication server function, AUSF) network element, a policy control function (policy control function, PCF) network element, and a user plane function (user plane function, UPF) network element.

Alternatively, the NTN base station and the terrestrial base station may implement assistance and interconnection with higher time validity through an interface defined between base stations. For example, the interface between the base stations may be an Xn interface, and an interface between the base station and the core network may be an NG interface. Certainly, the interface between the base stations and the interface between the base station and the core network may alternatively be implemented in another manner. This is not specifically limited in this application.

Optionally, in embodiments of this application, a satellite may provide a service to a terminal device by using a beam. For example, different beams may provide a service to the terminal device in one or more of the following modes: time division, frequency division, and space division. The satellite may operate in a regenerative mode, or may operate in a transparent mode. In addition, the satellite may operate in an earth-moving (earth-moving) mode or an earth-fixed (earth-fixed or quasi-earth fixed) mode. The satellite may be a low earth orbit (low earth orbit, LEO) satellite, a medium earth orbit (medium earth orbit, MEO) satellite, a geostationary earth orbit (geostationary earth orbit, GEO) satellite, or the like. This is not limited.

It can be understood that the satellites in the architectures in FIG. 1 to FIG. 5 each may be replaced with a non-terrestrial payload on another flight platform, for example, an unmanned aerial vehicle or an airplane.

It should be noted that in this application, a name of a message between devices, a name of each parameter, a name of each piece of information, or the like is merely an example, and may be another name in another embodiment. This is not specifically limited in a method provided in this application.

It should be noted that, in this application, an execution body may perform all or part of steps in this application. These steps or operations are merely examples. In this application, other operations or variants of various operations may be further performed. In addition, the steps may be performed in a sequence different from that presented in embodiments of this application, and not all of operations in embodiments of this application may be necessarily performed.

If an execution body of a specific step is a terminal device, the step may be performed by the terminal device. Unless otherwise specified, the "terminal device" in this application may be the terminal device, may be a component (for example, a processor, a chip, or a chip system) in the terminal device, or may be a logical module or software that can implement all or a part of functions of the terminal device.

If an execution body of a specific step is a network device, the step may be performed by the network device. Unless otherwise specified, the "network device" in this application may be the network device, may be a component (for example, a processor, a chip, or a chip system) in the network device, or may be a logical module or software that can implement all or a part of functions of the network device.

For ease of understanding of embodiments of this application, terms in embodiments of this application are first briefly described below. It should be understood that these descriptions are merely for ease of understanding of embodiments of this application, and should not constitute any limitation on this application.

### 1. NTN:

Currently, 5G NR has entered a commercial deployment phase from a standardization phase. An NR standard is mainly studied and designed based on characteristics of terrestrial communication. The terrestrial communication can provide high-rate, high-reliability, and low-latency communication and the like for a user terminal.

Compared with the terrestrial communication, NTN communication has significant advantages such as global coverage, long-distance transmission, flexible networking, convenient deployment, and not restricted by geographic conditions, and has been widely applied to a plurality of fields such as maritime communication, positioning and navigation, disaster relief, scientific experiments, video broadcasting, and earth observation. An NTN and a terrestrial network may be integrated and complement each other to jointly form a space-air-ground-sea integrated communication network, to meet a plurality of ubiquitous service requirements of users.

Based on an altitude of a flight platform above the ground, the NTN may include a low altitude platform (low altitude platform, LAP) subnetwork (LAP subnetwork), a high altitude platform (high altitude platform, HAP) subnetwork (HAP subnetwork), and a satellite communication subnetwork (SATCOM subnetwork).

For example, in the LAP subnetwork, a base station or a function of the base station is deployed on a low altitude flight platform (for example, an unmanned aerial vehicle) 0.1 km to 1 km above the ground to provide coverage for a terminal; in the HAP subnetwork, a base station or a function of the base station is deployed on a high altitude flight platform (for example, an airplane) 8 km to 50 km above the ground to provide coverage for a terminal; and in the SATCOM subnetwork, a base station or a function of the base station is deployed on a satellite more than 50 km above the ground to provide coverage for a terminal.

Further, based on an orbital altitude of a satellite, satellite communication systems may be classified into a GEO satellite communication system, a MEO satellite communication system, and a LEO satellite communication system.

The GEO satellite communication system is also referred to as a geosynchronous orbit satellite system. A GEO satellite has an orbital altitude of 35,786 km, and moves at a velocity that is the same as the rotation speed of the earth. In other words, the GEO satellite can remain stationary relative to the ground. The GEO satellite communication system can provide large cell coverage. Usually, a diameter of a cell is 500 km. However, GEO satellite communication also has significant disadvantages: (1) An orbit of the GEO satellite is far away from the earth, and a propagation loss in free space is large. Consequently, a budget of a communication link is tight. To increase a transmit/receive gain, a large-aperture antenna needs to be equipped for the satellite. (2) A transmission delay of communication is long. For example, a round-trip delay is approximately 500 milliseconds. This cannot meet a requirement of a real-time service. (3) GEO orbital resources are limited, launch costs are high, and no coverage can be provided for polar regions of the earth.

A MEO satellite has an orbital altitude ranging from 2,000 km to 35,786 km, and global coverage can be achieved with a small quantity of satellites. However, the orbital altitude of the MEO satellite is greater than an orbital altitude of a LEO satellite, and a transmission delay is longer than a transmission delay of LEO satellite communication. Therefore, in view of both the advantages and disadvantages of MEO satellite communication, the MEO satellite is mainly used in positioning and navigation.

The LEO satellite has an orbital altitude ranging from 300 km to 2,000 km, and the orbital altitude of the LEO satellite is smaller than the orbital altitude of the MEO satellite. The LEO satellite has advantages of a short transmission delay, a small transmission loss, lower launch costs, and the like.

A next-generation satellite communication system generally tends to be ultra-dense and heterogeneous. First, a satellite scale develops from 66 satellites of the Iridium satellite constellation to 720 satellites of the OneWeb satellite constellation, and eventually extends to more than 12,000 satellites of the Starlink (Starlink) ultra-dense LEO satellite constellation. In addition, a satellite network is heterogeneous, and develops from a conventional single-layer communication network to a multi-layer communication network. A communication satellite network also tends to have complex and diversified functions, and is gradually compatible with and supports navigation enhancement, earth observation, on-orbit processing of multi-dimensional information, and the like.

### 2. Earth-moving (earth-moving) mode and earth-fixed (earth-fixed or quasi-earth fixed) mode:

In a satellite communication system, operating modes of beams may usually include the earth-moving mode and the earth-fixed mode. As shown in FIG. 6a, in the earth-moving mode, within a period of time (for example, between a time t0 and a time t2), coverage of a satellite beam moves with a satellite. As shown in FIG. 6b, in the earth-fixed mode, within a period of time (for example, between a time t0 and a time t2), a satellite dynamically adjusts a beam direction, so that a beam approximately covers a same region on the ground.

For example, the beam may be represented in a protocol as a spatial domain filter (spatial domain filter), or referred to as a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by a transmission configuration indication (transmission configuration indication, TCI) state (TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state, a spatial relation, or the like. The foregoing terms are equivalent to each other. In this application, the beam may alternatively be replaced with another term that represents a beam. This is not limited in this application.

### 3. Association relationship between a beam size and an angle:

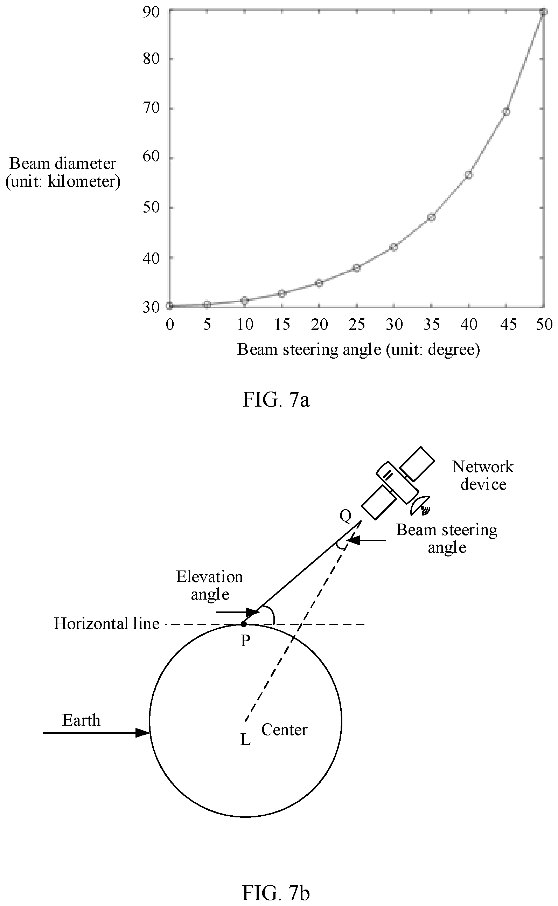

For example, the angle is a beam steering angle. As shown in FIG. 7a, as the beam steering angle increases, the beam size usually tends to increase. For example, when the beam steering angle is 0 degrees, a diameter of a beam is approximately 30 kilometers (km). For another example, when the beam steering angle is 45 degrees, a diameter of a beam is approximately 72 km.

The beam steering angle is shown in FIG. 7b. A location of a network device is denoted as Q, a center of the earth is denoted as L, and a beam has a specific projection (or contour) on an earth surface. P may be located at an edge of the projection. FIG. 7b is a diagram of a beam steering angle of the network device at the location Q.

In addition, the beam steering angle may alternatively be described by using another name, for example, an antenna steering angle. In this application, the beam steering angle is used as an example for description.

It should be understood that the angle may alternatively be replaced with an elevation angle. A location of a terminal device may be denoted as P. FIG. 7b is further a diagram of an elevation angle of the terminal device in the location P. In this application, the location of the network device is denoted as Q, and the location of the terminal device is denoted as P. In this case, there is a specific conversion relationship between the beam steering angle and the elevation angle. In this way, there is also an association relationship between the beam size and the elevation angle. For example, as the elevation angle increases, the beam size usually tends to decrease.

### 4-1. Region:

Unless otherwise specified, the "region" in the following embodiments of this application is a geographic region. The region is stationary relative to the earth, or this is understood as: The region is a geographic region that is stationary relative to the earth. For example, the region may have at least one of the following attributes: a shape, a contour, a size, a radius, an area, a geographic location, and the like.

In a possible implementation, the region that is stationary relative to the earth may also be referred to as a "beam position", a "geographic region", or the like. Certainly, the region may have another name. A name of the region that is stationary relative to the earth is not specifically limited in this application.

Shapes, contours, sizes, radii, and areas of different regions may be the same or may be different. Different regions have different geographic locations. Different regions may overlap or may not overlap.

In a possible implementation, that the region is stationary relative to the earth may be understood as: A contour, a size, or a geographic location of the region remains unchanged. For example, the contour, the size, or the geographic location of the region does not change with time. Alternatively, that the region is stationary relative to the earth may be understood as: Points on a contour of the region and in the region may be described by using an earth-fixed coordinate system, or coordinates of each point on a contour of the region in an earth-fixed coordinate system remain unchanged.

In a possible implementation, a shape of the region may be a regular hexagon or another shape, for example, a regular pentagon, a rectangle, a circle, or an ellipse. Alternatively, a shape of the region may be an irregular shape. This is not limited.

For example, the shape of the region may be defined in a protocol, or may be defined by a network device. Shapes, of regions, that are defined by different network devices may be the same or may be different. A same network device may alternatively define a plurality of shapes of regions. Similarly, the size, the radius, and the area of the region may also be defined in a protocol, or may be defined by the network device. Sizes, radii, and areas, of regions, that are defined by different network devices may be the same or may be different. A same network device may alternatively define a plurality of sizes of regions, a plurality of radii of regions, or a plurality of areas of regions.

In a possible implementation, the earth surface may be divided into a plurality of regions, and the plurality of regions are indexed (for example, numbered).

In a possible division manner, a geographic location of the region is determined based on an identifier of the region. To be specific, a geographic location of a specific region may be obtained based on an identifier of the region. In other words, there is an association relationship between an identifier of a region and a geographic location of the region. For example, a plurality of regions may be obtained through discretization on the earth, each region corresponds to one identifier, and a geographic location of a region may be obtained based on an identifier of the region.

### 4-2. Coverage region of the network device:

The coverage region of the network device may be a maximum region that can be covered by the network device. In other words, the coverage region of the network device indicates (or reflects) a maximum coverage capability of the network device.

The coverage region of the network device varies with movement of the network device. To be specific, the coverage region of the network device may vary at different times. The coverage region of the network device includes at least one of the foregoing regions (namely, beam positions).

Because the coverage region of the network device varies with the movement of the network device, and the region (namely, the beam position) is stationary relative to the earth, a region (namely, a beam position) included in the coverage region of the network device may vary at different times.

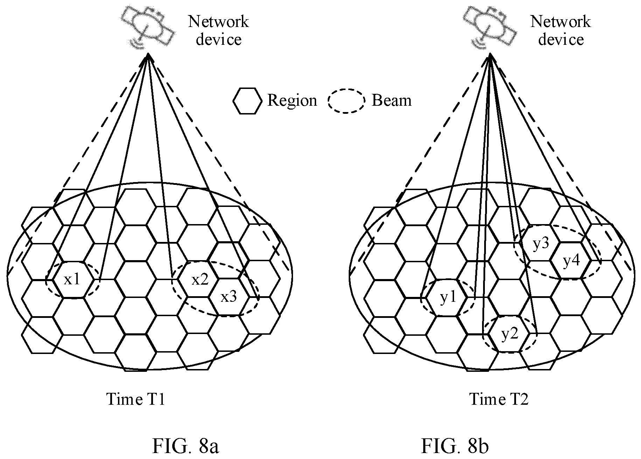

For example, a shape of the region is a polygon. As shown in FIG. 8a and FIG. 8b, an elliptic solid line may represent the coverage region of the network device. All regions represented by pentagons and hexagons in the elliptic solid line are regions (namely, beam positions) included in the coverage region of the network device.

### 4-3. Service region of the network device:

The service region of the network device may be a maximum region that can be served (or covered) by a beam of the network device. In other words, the service region of the network device indicates (or reflects) a maximum service capability of the network device.

The service region of the network device is smaller than or equal to the coverage region of the network device. For example, based on the example shown in FIG. 8a and FIG. 8b, the service region of the network device may be a range represented by the elliptic solid line. In this case, the service region of the network device is equal to the coverage region of the network device. Alternatively, the service region of the network device may be less than a range represented by the elliptic solid line.

The service region of the network device varies with movement of the network device. To be specific, the service region of the network device may vary at different times. The service region of the network device includes at least one of the foregoing regions (namely, beam positions).

Because the service region of the network device varies with the movement of the network device, and the region (namely, the beam position) is stationary relative to the earth, a region (namely, a beam position) included in the service region of the network device may vary at different times.

### 4-4. Active region of the network device:

A region that is currently being served (or covered) by a beam of the network device may be referred to as the active region or an activated region. A region that is currently not being served (or covered) by the beam of the network device may be referred to as an inactive region or a non-activated region. The active region of the network device is one or more regions in the service region of the network device.

At a specific time, the beam of the network device serves (or covers) the active region, namely, a part of regions in the service region of the network device. At different times, the beam of the network device serves (or covers) different active regions, namely, different regions in the service region of the network device.

For example, as shown in FIG. 8a, at a time T1, the active region served by the beam of the network device includes regions x1, x2, and x3. As shown in FIG. 8b, at a time T2, the active region served by the beam of the network device includes regions y1, y2, y3, and y4.

### 5. Description of a service region in an NTN:

In a first possible implementation, contours (which may be understood as projections of beams on the ground) corresponding to antenna gains, receive power, or the like in different regions on the ground may be calculated based on an antenna radiation pattern, for example, a given antenna model, to represent a service region of a satellite/cell. The contour may also be understood as a beam position.

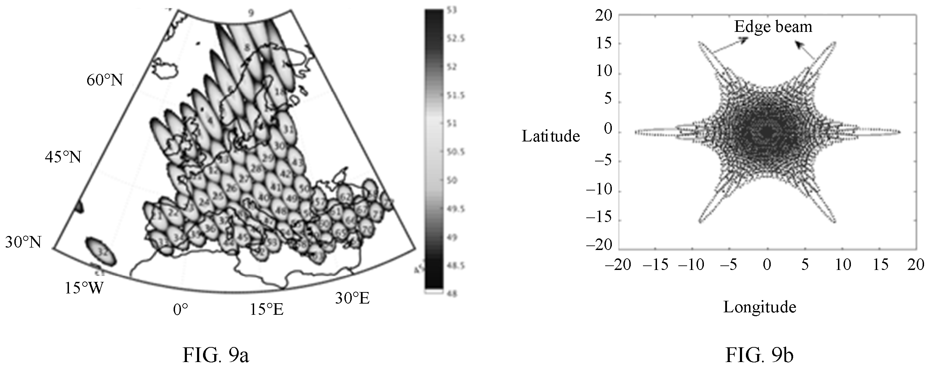

For example, FIG. 9a shows an antenna gain pattern of a 72-beam reference system of a single GEO satellite. An ellipse represents a projection of a beam on the ground, in other words, represents a beam position. FIG. 9b shows a contour of beams of a LEO satellite on a longitude-latitude plane in an earth-moving mode.

In the first possible implementation, because the projection of the beam on the ground is understood as the beam position, it may be considered that the beam position is statically bound to the beam. Therefore, this solution is usually applied to a GEO satellite network or a satellite network in the earth-moving mode. However, in an earth-fixed mode, a tilt angle between a satellite and a specific region on the ground dynamically varies, and a projection of a beam varies accordingly. Therefore, the solution in which a beam position is statically bound to a beam may no longer be applicable.

In a second possible implementation, the earth surface may be divided into regular pentagonal or regular hexagonal grids based on an H3 geographic grid, and the grid represents a service region of a satellite/cell. For example, the service region of the satellite/cell may include one or more grids. Each grid may be understood as one beam position.

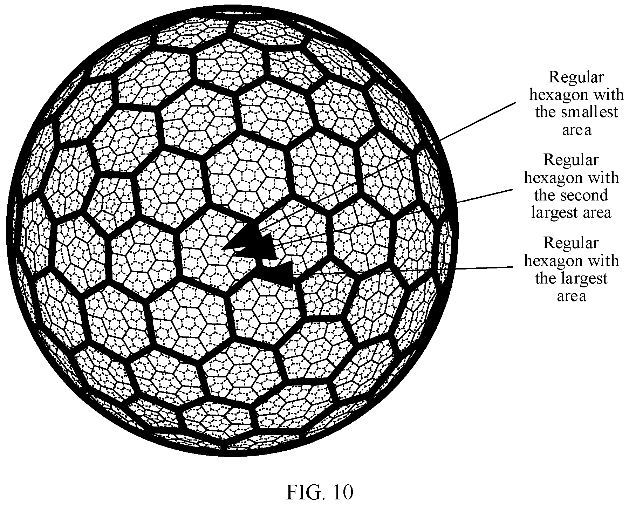

The second possible implementation supports hierarchical addressing of the beam position. For example, as shown in FIG. 10, there are regular hexagons with three areas, namely, a small area, a medium area, and a large area. A regular hexagon with the smallest area represents a beam position, and regular hexagons with the remaining two areas may be for hierarchical addressing of the beam position. For ease of description, a regular hexagon with the largest area and a regular hexagon with the second largest area are respectively referred to as a first regular hexagon and a second regular hexagon in the following embodiments.

Based on the example shown in FIG. 10, during the hierarchical addressing of the beam position, an index of the first regular hexagon may be understood as a first-layer index of the beam position, an index of the second regular hexagon may be understood as a second-layer index of the beam position, and an index of the regular hexagon with the smallest area may be understood as a third-layer index of the beam position. During indexing of a specific beam position, a first regular hexagon to which the beam position belongs may be first determined based on a first-layer index, then a second regular hexagon to which the beam position belongs and that is in the first regular hexagon is determined based on a second-layer index, and finally the beam position in the second regular hexagon is determined based on a third-layer index.

In the second possible implementation, only 16 beam position radii with different precision are supported currently, and it is difficult to adapt to different payload capabilities (for example, beam radii). For example, when precision of a beam position radius is an integer and a beam radius is not an integer, the beam position cannot accurately indicate a service region of a satellite/cell.

In addition, when a specific geographic location of a beam position is determined based on an index value of the beam position, the index value of the beam position is usually indicated by using 64 bits. This causes high signaling overheads.

In addition, a reference location of a beam position is indicated by using 48 bits, and signaling overheads are also high. For example, when a radius of a region is 200 km, there are approximately 78,702 beam positions globally in total. If a reference location of each beam position occupies 48 bits, a total of 48*78,702=3.77 Mbits are needed to indicate global reference locations, and signaling overheads are high.

It is easy to understand that, in this application, the payload capability may include at least one of the following: an antenna capability (for example, a quantity of antenna elements), transmit power, or the like. The antenna capability and/or the transmit power affects the beam radius. In this case, different payload capabilities indicate different beam radii. Correspondingly, that only 16 beam position radii with different precision are supported currently, and it is difficult to adapt to different payload capabilities may be understood as: Only 16 beam position radii with different precision are supported currently, and it is difficult to adapt to different beam radii.

### 6. Group handover and group reselection:

Movement of a satellite causes group handover of terminal devices in a connected state in a specific region, or causes group reselection of terminal devices in an idle state or an inactive state in the region.

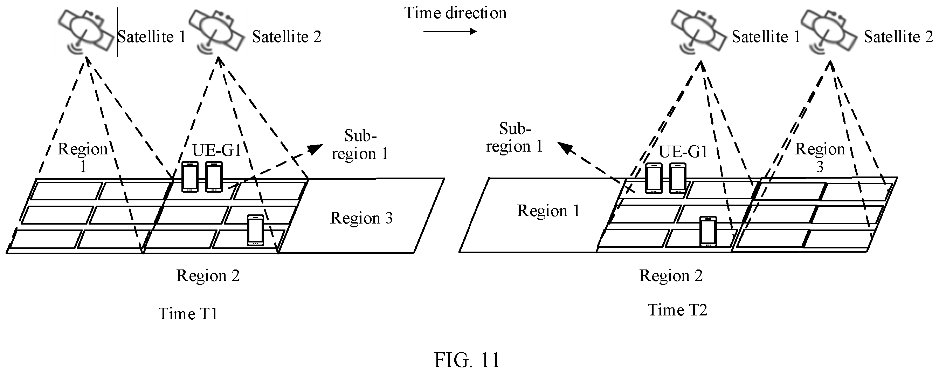

Using the group handover as an example, as shown in FIG. 11, it is assumed that a UE cluster (denoted as UE-G1, including a plurality of UEs) exists in a sub-region 1 of a region 2. At a time T1, the sub-region 1 is served by one or more beams of a satellite 2. At a time T2, the satellite 2 cannot continue to serve the sub-region 1 due to movement of the satellite 2, and a satellite 1 takes over from the satellite 2 to serve the sub-region 1 by using one or more beams. During this process, because a satellite that covers the sub-region 1 changes, the plurality of UEs in UE-G1 undergo the group handover, and are handed over from the satellite 2 to the satellite 1.

Because a satellite moves at a high velocity, for example, an LEO satellite moves at a velocity of approximately 7.5 km/s, group handover frequently occurs, approximately once several seconds to tens of seconds.

### 7. Beam management:

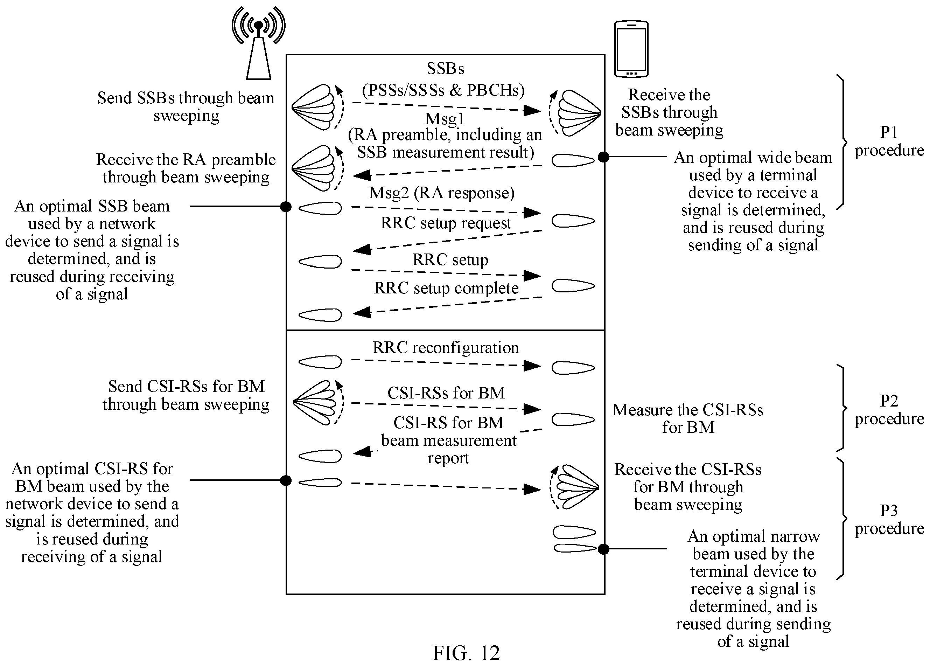

As shown in FIG. 12, first, a network device (for example, a base station) sends synchronization signal block (synchronization signal block, SSB) beams in different directions in cell coverage in a time division manner through beam sweeping. Correspondingly, a terminal device receives the SSB beams through beam sweeping, and measures signal quality of each SSB beam.

Subsequently, if the terminal device is in a radio resource control (radio resource control, RRC) idle state, the terminal device performs random access (random access, RA), and sends a message 1 (message 1, Msg1) to the network device (for example, the base station), where the message 1 carries a random access preamble, and the random access preamble carries an SSB index (index) corresponding to an SSB beam with optimal signal quality. After receiving the random access preamble through beam sweeping, the network device (for example, the base station) may determine the SSB beam with the optimal signal quality as a downlink transmit beam. When receiving an uplink signal, the network device (for example, the base station) may reuse the downlink transmit beam. In addition, a beam used by the terminal device to receive a downlink signal is an SSB beam with optimal signal quality, and the terminal device may reuse the downlink receive beam when sending an uplink signal.

If the terminal device is in an RRC connected state, the terminal device sends an SSB measurement result to the network device (for example, the base station) by using a measurement report, and the network device (for example, the base station) determines a downlink transmit beam based on the SSB measurement result, and reuses the downlink beam when receiving an uplink signal. In addition, the network device (for example, the base station) may indicate, to the terminal device, the downlink transmit beam determined by the network device (for example, the base station), and the terminal device may determine, based on the downlink transmit beam and a beam pairing result, a downlink receive beam that matches the downlink transmit beam.

In addition, the network device (for example, the base station) may use narrower channel state information-reference signal (channel state information-reference signal, CSI-RS) for beam management (beam management, BM) (CSI-RS for BM) beams near the downlink transmit beam (namely, the optimal SSB beam) to perform beam sweeping.

Correspondingly, the terminal device feeds back a measurement result for the CSI-RS for MB beams to the network device (for example, the base station) by using a measurement report. The network device (for example, the base station) determines a downlink transmit beam (for example, an optimal CSI-RS for BM beam) based on the measurement result, and reuses the downlink transmit beam when receiving an uplink signal. The terminal device may receive the CSI-RS for BM beams through beam sweeping, to determine a downlink receive beam (for example, an optimal CSI-RS for BM beam), and reuse the downlink receive beam when sending an uplink signal.

However, beam management in an existing communication system is generally completed based on signal quality and a beam ID. In a satellite communication system, for example, in a LEO scenario, because a near-far effect is not obvious, efficiency of beam management (especially beam switching) triggered based on only signal quality is low.

In addition, movement of a satellite causes a rapid change in a beam ID received on a terminal device side, and the terminal device side needs to frequently adjust a receive beam and a corresponding transmit/receive time-frequency resource. Correspondingly, a network device needs to frequently deliver configuration information to the terminal device. The configuration information includes a configuration parameter for a beam, so that the terminal device determines the receive beam and the transmit/receive time-frequency resource based on the configuration parameter. This causes high signaling overheads.

It can be learned from the foregoing that, for the satellite communication system, especially a satellite communication system in an earth-fixed mode, how to determine a region covered by a satellite beam is a technical problem to be urgently resolved.

In view of this, this application provides a communication method. The method may be applied to the systems shown in FIG. 1 to FIG. 5. The method includes: A terminal device determines a first parameter, where the first parameter is associated with an angle, and the angle includes a beam steering angle or an elevation angle. The terminal device determines a reference location of a first region based on the first parameter and a first mapping relationship, where the first mapping relationship indicates a conversion relationship between the first parameter and the reference location of the first region.

In this application, because the first mapping relationship can indicate the conversion relationship between the first parameter and the reference location of the first region, when the terminal device has determined the first parameter, the terminal device may determine the reference location of the first region based on the first parameter and the first mapping relationship.

Because the first parameter is associated with the angle, the first region may be regions covered by beams with different beam steering angles, or the first region may be regions at different elevation angles of the terminal device, to be specific, a radius of the first region may have a plurality of values. Compared with an H3 geographic grid-based method that supports only 16 region radii, this application can adapt to regions with different radii. In other words, even for regions with different radii, the terminal device may determine the reference location of the first region based on the first parameter and the first mapping relationship, to improve region determining flexibility of the terminal device.

Furthermore, because the reference location of the first region may be determined by using the first parameter, the terminal device and a network device may interact based on the first parameter. A quantity of bits needed for indicating the first parameter is smaller than that needed for communicating a contour of a region covered by a beam, a beam-position reference location in an H3 geographic grid, or the like. Therefore, signaling overheads are lower. For example, when a radius of a region is 200 km, there are approximately 78,702 regions (namely, beam positions) globally in total. If a reference location of each region (namely, beam position) occupies 48 bits in a related technology, a total of 48*78,702=3.77 Mbits are needed to indicate global reference locations. In this application, only the first parameter needs to be indicated. When there are only 16 values of the first parameter, only 4 bits are needed to indicate the first parameter. A terminal device side can quickly obtain the global reference locations through computing based on only the first parameter, and signaling overheads are only 4 bits.

In addition, the terminal device may perform communication based on the reference location of the first region. For example, when the first region is an active region of the network device, if the terminal device is located in the first region, the terminal device may communicate with the network device, to help improve communication effectiveness.

The following describes in detail a communication method provided in embodiments of this application.

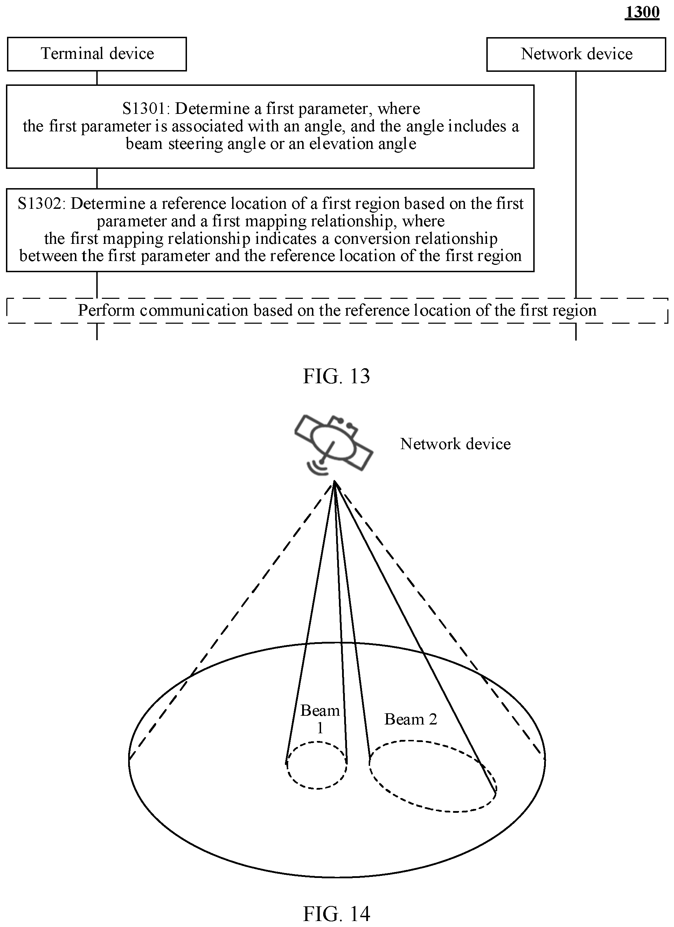

As shown in FIG. 13, a communication method 1300 according to an embodiment of this application includes the following operations.

S1301: A terminal device determines a first parameter.

The first parameter is described as follows:
In a first possible implementation, the first parameter is associated with an angle. The angle includes a beam steering angle or an elevation angle. For details, refer to the descriptions in the term description part, and the details are not described again. In this application, the first parameter may indicate one or more of a quantity of regions, a region radius, and a region level.

It should be noted that, in this application, for the "region", refer to the descriptions in the term description part. Details are not described again.

In this application, there may be one or more types of regions. For example, the region includes at least one of the following types: a broadcast region or a service region. The broadcast region is a geographic region covered by a broadcast beam. The service region is a geographic region covered by a traffic beam.

Using an example in which one beam covers one region, Table 1 enumerates an association relationship among the region level, the region radius, and the beam steering angle.

**Table 1**

| Region level | Beam steering angle *θ* (unit: degree) | Region radius (unit: km) | Quantity of regions |
|---|---|---|---|
| 1 | 0≤*θ*<25 | 30 | 100 |
| 2 | 25≤*θ*<30 | 40 | 80 |
| ... | ... | ... | ... |
| K (K≥2) | 45≤*θ*<50 | 70 | 20 |

In Table 1, K is a positive integer greater than or equal to 2.

As enumerated in Table 1, a smaller beam steering angle indicates a smaller region covered by each beam on the ground. Using FIG. 14 as an example, a region covered by a beam 1 is smaller.

As enumerated in Table 1, a larger beam steering angle indicates a larger region covered by each beam on the ground. Using FIG. 14 as an example, a region covered by a beam 2 is larger.

When a plurality of beams cover a specific geographic range, if a beam steering angle of each of the plurality of beams is small, a region covered by each beam on the ground is small. Correspondingly, the beam steering angle corresponds to a large quantity of beams. Because one beam covers one region, the beam steering angle corresponds to a large quantity of regions. On the contrary, if a beam steering angle of each of the plurality of beams is large, a region covered by each beam on the ground is large. Correspondingly, the beam steering angle corresponds to a small quantity of beams. Because one beam covers one region, the beam steering angle corresponds to a small quantity of regions.

It should be noted that in this application, for a same region level, the region radius and the quantity of regions satisfy a specific association relationship. For example, using a region level *k* as an example, the region radius and the quantity of regions at the level satisfy the following formula (1): ${N}_{spot _ k} = \frac{8 {πR}_{e}^{2}}{3 \sqrt{3} {R}_{spot _ k}^{2}}$ formula (1) where *N*_{*spot*_*k*} represents the quantity of regions corresponding to the region level *k*, *R*_{*spot*_*k*} represents the region radius corresponding to the region level *k*, and *Rₑ* represents a parameter of an earth surface on which the *N*_{*spot*_*k*} regions are located.

It should be noted that, in this application, an example in which the earth surface on which the *N*_{*spot*_*k*} regions are located is the earth is used, where *Rₑ* represents a radius of the earth, and a value may be 6,378 km. Certainly, *Rₑ* may alternatively be a parameter less than the radius of the earth, or may be a parameter greater than the radius of the earth. In terms of a configuration manner, *Rₑ* may be a preconfigured parameter, or may be a parameter configured by a network device. This is not limited in this embodiment of this application.

Optionally, the first parameter indicates a first quantity of regions. The first quantity of regions is the quantity of regions corresponding to the region level *k*, and is denoted as *N*_{*spot*_*k*}, where 1≤*k*≤K. This can be understood as: The first parameter indicates a quantity of regions corresponding to one region level, and the region level may be a region level in K region levels.

Optionally, the first parameter indicates a first region radius. The first region radius is the region radius corresponding to the region level *k*, and is denoted as *R*_{*spot*_*k*}, where 1≤*k*≤K. This can be understood as: The first parameter indicates a region radius corresponding to one region level, and the region level may be a region level in K region levels.

Optionally, the first parameter indicates a first region level. The first region level is the region level *k*. This can be understood as: The first parameter indicates one region level, and the region level may be a region level in K region levels.

In a second possible implementation, the first parameter is associated with a location. The location is determined based on an angle (for example, a beam steering angle). The location may be understood as a location of a geographic region covered by one or more beams within a specific angle range of the beam steering angle.

Still using Table 1 as an example, when the range of the beam steering angle is 0≤*θ*<25, a beam in the range of the beam steering angle covers a specific geographic region, and the geographic region may be represented by a longitude or a latitude. For example, a longitude range of the geographic region is *x*₀ - *x*₁, and a latitude range of the geographic region is *y*₀ - *y*₁.

Still using Table 1 as an example, when the range of the beam steering angle is 25≤*θ*<30, a beam in the range of the beam steering angle covers a specific geographic region, and the geographic region may be represented by a longitude or a latitude. For example, a longitude range of the geographic region is *x*₁ *- x*₂, and a latitude range of the geographic region is *y*₁ *- y*₂.

It is easy to understand that the "beam steering angle" in Table 1 may be replaced with the "location", as enumerated in Table 2:

**Table 2**

| Region level | Location (longitude, latitude) | Region radius (unit: km) | Quantity of regions |
|---|---|---|---|
| 1 | *x*₀ - *x*₁, *y*₀ - *y*₁ | 30 | 100 |
| 2 | *x*₁ *- x*₂, *y*₁ *- y*₂ | 40 | 80 |
| ... | ... | ... | ... |
| K (K≥2) | *x*_{*K*-1} - *x*_{K}, *y*_{*K* - 1} - *y_{K}* | 70 | 20 |

It should be added that, for the terminal device, the terminal device may determine the first quantity of regions based on the first parameter. Details are as follows:
Case 1: The first parameter indicates the first quantity of regions.
Case 2: The first parameter indicates the first region radius. In this case, the terminal device may determine the first quantity of regions based on the formula (1) and the first region radius.
Case 3: The first parameter indicates the first region level. In this case, the terminal device determines the first quantity of regions based on the first region level and a second parameter. The second parameter may indicate a second quantity of regions. The second parameter may be a preconfigured parameter, or may be a parameter configured by the network device. This is not limited in this embodiment of this application.
   For example, the second parameter may be understood as a reference parameter. The quantity of regions that is indicated by the second parameter may be understood as a reference quantity of regions, for example, denoted as *N*_{*spot*_*base*}. When the first region level indicated by the first parameter is *k,* the first quantity of regions satisfies *N*_{*spot*_*k*} = *k* × *N*_{*spot*_*base*}. *N*_{*spot*_*k*} represents the first quantity of regions, *k* represents the first region level, and *N*_{*spot*_*base*} represents the second quantity of regions.
Case 4: The first parameter indicates the first region level. In this case, the terminal device determines the first region radius based on the first region level and a second parameter. The second parameter may indicate a second region radius. The second parameter may be a preconfigured parameter, or may be a parameter configured by the network device. A manner of configuring the second parameter is not limited in this application.

For example, the second parameter may be understood as a reference parameter. The region radius indicated by the second parameter may be understood as a reference region radius, for example, denoted as *R*_{*spot*_*base*}. When the first region level indicated by the first parameter is *k,* the first region radius satisfies *R*_{*spot*_*k*} = *k* × *R*_{*spot*_*base*}. *R*_{*spot*_*k*} represents the first region radius, *k* represents the first region level, and *R*_{*spot*_*base*} represents the second region radius. Then, the terminal device may determine the first quantity of regions based on the formula (1) and the first region radius.

For the terminal device, after determining the first parameter, the terminal device performs S1302:
S1302: The terminal device determines a reference location of a first region based on the first parameter and a first mapping relationship.

Optionally, the first mapping relationship satisfies the following formula (2): $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot _ k}}\right)$ where *RL*(*k,i*) represents three-dimensional coordinates corresponding to the reference location of the first region, *k* represents an identifier of the first region level, *i* represents a region identifier of the first region, i is a non-negative integer less than *N*_{*spot*_*k*}, *Rₑ* represents a parameter of an earth surface on which the first region is located, *N*_{*spot*_*k*} represents the first quantity of regions, and [ ] represents a fractional part operator.

It is easy to understand that, in this application, when a region label or a region number is used as a region identifier, each value in {*0*, ···, *N*_{*spot*_}*ₖ -* 1} may be traversed for *i* according to the foregoing formula (2). Correspondingly, the terminal device may obtain a reference location of each region in the *N*_{*spot*_*k*} regions according to the foregoing formula (2).

Further, that i represents the region identifier of the first region (for example, i is a region label of the first region, and identifies the first region) may be understood as: Each region in the *N*_{*spot*_*k*} regions may be considered as a first region. Correspondingly, the terminal device may traverse each first region in the *N*_{*spot*_*k*} regions according to the foregoing formula (2), to obtain the reference location of each first region in the *N*_{*spot*_*k*} regions.

It is easy to understand that, in a possible equivalent conversion form, the foregoing formula (2) may be equivalently converted into a longitude-latitude location.

For example, a projection of *RL(k, i)* on a unit square (unit square) is *RL(k, xᵢ, yᵢ*). The unit square is a square whose corners are at four points (0, 0), (1, 0), (0, 1), and (1, 1) on a Cartesian plane.

In other words, the first mapping relationship satisfies the following formula (3): $RL \left(k, {x}_{i}\right) = \left(1-{cosθ}_{i}\right) / 2$ $RL \left(k, {y}_{i}\right) = {φ}_{i} {\left(2π\right)}^{- 1}$ ${φ}_{i} = 2 π \left[\frac{2 i}{1 + \sqrt{5}}\right]$ ${θ}_{i} = {cos}^{- 1} \left(1-\frac{2 i + 1}{{N}_{spot _ k}}\right) , i ∈ \left\{0,⋯,{N}_{spot _ k}-1\right\}$ where *RL*(*k, xᵢ*) represents a horizontal coordinate of a projection of the reference location of the first region on a unit square on which the reference location is located, *RL(k, yᵢ*) represents a vertical coordinate of the projection of the reference location of the first region on the unit square on which the reference location is located, i represents a region identifier of the first region, *N*_{*spot*_*k*} represents the first quantity of regions, and [ ] represents a fractional part operator.

It is easy to understand that, in another possible equivalent conversion form, the foregoing formula (2) may use Cartesian coordinates *RL*(*xᵢ, yᵢ*) of a Fibonacci lattice. In other words, the first mapping relationship satisfies the following formula (4): $RL \left(k, {x}_{i}\right) = i / {N}_{spot _ k}$ $RL \left(k, {y}_{i}\right) = frac \left(\frac{i}{∅}\right)$ $∅ = \frac{1 + \sqrt{5}}{2}$ where *RL*(*k, xᵢ*) represents a horizontal coordinate of the reference location of the first region in Cartesian coordinates, *RL(k, yᵢ*) represents a vertical coordinate of the reference location of the first region in Cartesian coordinates, i represents a region identifier of the first region, *N*_{*spot*_*k*} represents the first quantity of regions, and *frac()* represents a fractional part operator.

For example, the first mapping relationship satisfies the following formula (5): $RL \left(k, i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot _ k}} - 1$ $∅ = \frac{1 + \sqrt{5}}{2}$ where *RL*(*k,i*) represents three-dimensional coordinates corresponding to the reference location of the first region, *k* represents an identifier of the first region level, *i* represents a region identifier of the first region, *i* is a non-negative integer less than *N*_{*spot*_*k*}, *Rₑ* represents a parameter of an earth surface on which the first region is located, and *N*_{*spot*_*k*} represents the first quantity of regions.

For example, the first mapping relationship satisfies the following formula (6): $RL \left(k, i\right) = \left(lon\left(k, i\right),lat\left(k, i\right)\right)$ $lon \left(k, i\right) = {sin}^{- 1} \left(\frac{2 i}{2 N + 1}\right)$ $lat \left(k, i\right) = 2 πi {∅}^{- 1}$ ${N}_{spot _ k} = 2 N + 1$ $∅ = \frac{1 + \sqrt{5}}{2}$ where *RL*(*k,i*) represents the reference location of the first region, *lon*(*k,i*) represents a longitude corresponding to the reference location of the first region, *lat*(*k,i*) represents a latitude corresponding to the reference location of the first region, k represents an identifier of the first region level, i represents the region identifier of the first region, i is a non-negative integer less than *N*_{*spot*_*k*}, and *N*_{*spot*_*k*} represents the first quantity of regions.

It should be noted that a unit of the longitude *lon(k, i)* corresponding to the reference location of the first region may be a radian. Similarly, a unit of the latitude *lat*(*k,i*) corresponding to the reference location of the first region may also be a radian.

The first region is described as follows:
Example 1: The first region is any region in the *N*_{*spot*_*k*} regions indicated by the first parameter.

In this case, because the parameter i is traversed from 1 to *N*_{*spot*_*k*} in the foregoing formula (2) to formula (6), the terminal device may learn of a reference location of any region in the *N*_{*spot*_*k*} regions according to the foregoing formulas. In other words, the terminal device may learn of a topology status of the *N*_{*spot*_*k*} regions, a coverage status of the *N*_{*spot*_*k*} regions, an adjacency relationship between different regions in the *N*_{*spot*_*k*} regions, or the like.

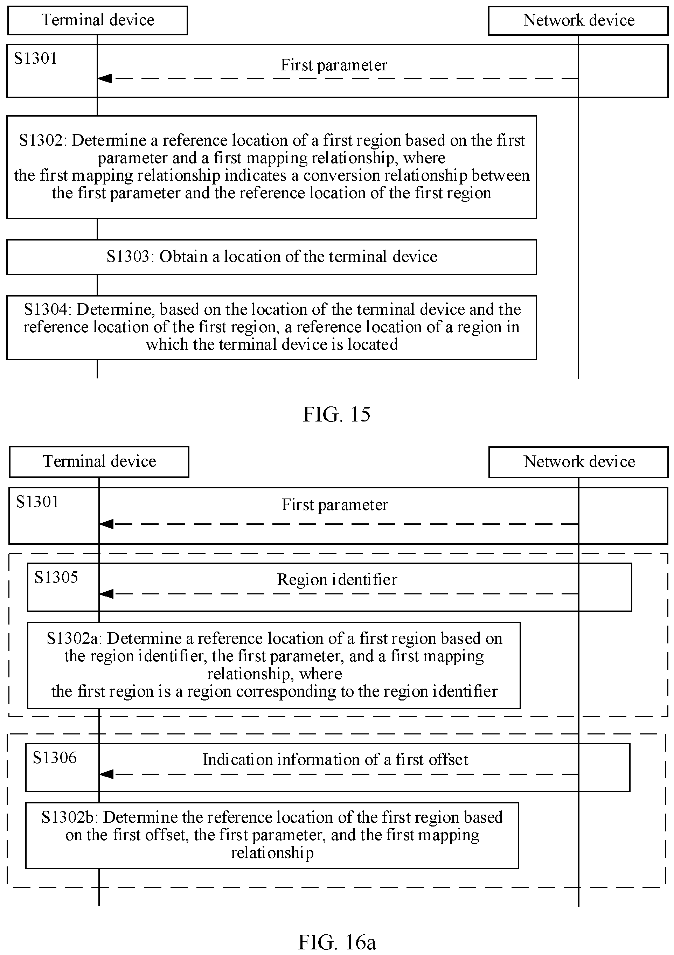

It is easy to understand that the example 1 may be understood as: The terminal device may determine a reference location of each region in the *N*_{*spot*_*k*} regions. Further, as shown in FIG. 15, the method further includes S1303 and S1304:
S1303: The terminal device obtains a location of the terminal device.

For example, the terminal device may obtain a GNSS location of the terminal device.

S1304: The terminal device determines, based on the location of the terminal device and the reference location of the first region, a reference location of a region in which the terminal device is located.

For example, the first region is any region in the *N*_{*spot*_*k*} regions indicated by the first parameter. The terminal device selects, from the reference locations of the *N*_{*spot*_*k*} regions, a region whose reference location is closest to the location of the terminal device as the region in which the terminal device is located. Correspondingly, the terminal device can determine the reference location of the region in which the terminal device is located.

In this way, the terminal device can determine the reference location of the region in which the terminal device is located.

Example 2: The first region is a region indicated by the network device by using the region identifier.

In the example 2, as shown in FIG. 16a, the method further includes S1305:
S1305: The terminal device obtains the region identifier.

The region identifier identifies a region. For example, the region identifier identifies one of the foregoing *N*_{*spot*_*k*} regions.

For example, the network device sends the region identifier to the terminal device. Correspondingly, the terminal device receives the region identifier from the network device.

When the terminal device performs S1305, S1302 includes S1302a:
S1302a: The terminal device determines the reference location of the first region based on the region identifier, the first parameter, and the first mapping relationship.

The first region is a region corresponding to the region identifier.

For example, the region identifier is a region number. For example, a region identifier of a 1^{st} region in the foregoing *N*_{*spot*_*k*} regions is 1, a region identifier of a 2^{nd} region in the foregoing *N*_{*spot*_*k*} regions is 2, and a region identifier of a 3^{rd} region in the foregoing *N*_{*spot*_*k*} regions is 3. The rest can be deduced by analogy. In this case, if the region identifier is *i*, the first region is an *i*^{th} region in the foregoing *N*_{*spot*_*k*} regions. The terminal device determines a reference location of the *i*^{th} region in the *N*_{*spot*_*k*} regions based on the region identifier, the first parameter, and the first mapping relationship. Correspondingly, the terminal device can determine the reference location of the first region.

In this way, the terminal device can determine a reference location of the region identified by the region identifier.

In some embodiments, as shown in FIG. 16a, the method further includes S1306:
S1306: The network device sends indication information of a first offset to the terminal device. Correspondingly, the terminal device receives the indication information of the first offset from the network device.

The first offset is for adjusting the reference location of the first region.

When the terminal device performs S1306, S1302 includes S1302b:
S1302b: The terminal device determines the reference location of the first region based on the first offset, the first parameter, and the first mapping relationship.

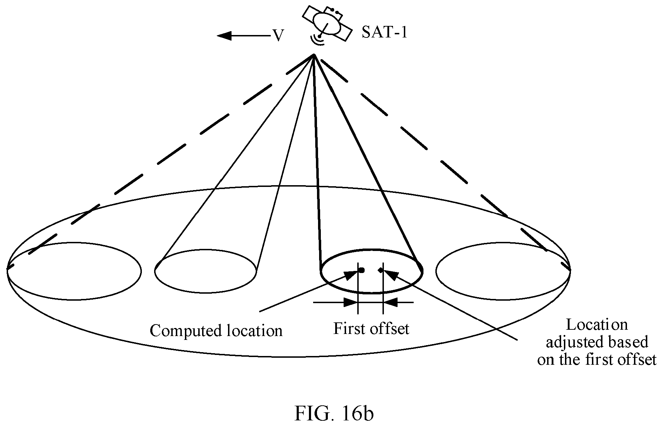

For example, the terminal device obtains a location parameter, for example, a location shown by a circular point in FIG. 16b, according to any one of the formula (2) to the formula (6). Then, the terminal device adjusts the location parameter based on the first offset, to obtain the reference location of the first region, for example, a location shown by a diamond point in FIG. 16b.

In this way, the terminal device may perform adjustment based on the first offset, so that the reference location of the region is more accurate.

It should be noted that, as enumerated in Table 1 (or Table 2), at least one region level is defined in this application. For the network device, the network device may deliver a parameter corresponding to a specific region level. For example, the network device has learned of an elevation angle of the terminal device, and delivers a relevant parameter (for example, one or more of a region level, a quantity of regions, and a region radius) of the region level corresponding to the elevation angle. Alternatively, the network device may deliver parameters corresponding to a plurality of region levels. Correspondingly, the terminal device may receive the parameter corresponding to the specific region level, or may receive the parameters corresponding to the plurality of region levels. Next, an implementation process of S1301 is described by using two cases (the following case 1 and case 2).

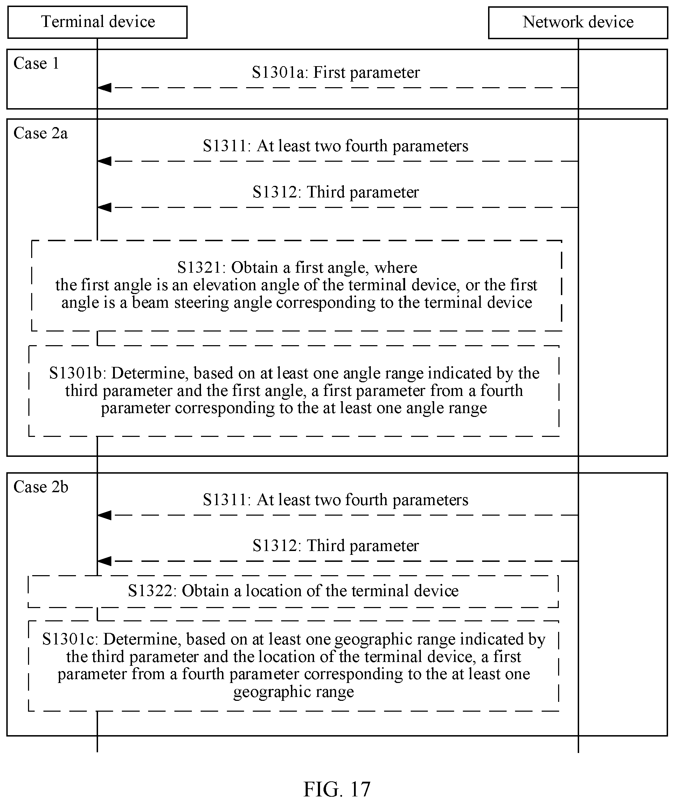

Case 1: As shown in FIG. 17, S1301 includes S1301a:
S1301a: The network device sends the first parameter to the terminal device. Correspondingly, the terminal device receives the first parameter from the network device.

The first parameter is associated with the elevation angle of the terminal device. For example, the elevation angle of the terminal device is within an angle range corresponding to the first parameter.

The first parameter indicates one region level, the first parameter indicates a quantity of regions corresponding to one region level, and/or the first parameter indicates a region radius corresponding to one region level.

For example, the first parameter may be carried in one of the following: radio resource control (radio resource control, RRC) signaling, downlink control information (downlink control information, DCI), or a medium access control-control element (medium access control-control element, MAC-CE).

Case 2: As shown in FIG. 17, S1301 includes S1301b or S1301c, and the terminal device further performs S1311 and S1312. Details are described as follows:
S1311: The network device sends at least two fourth parameters to the terminal device. Correspondingly, the terminal device receives the at least two fourth parameters from the network device.

In the at least two fourth parameters, each fourth parameter indicates one quantity of regions, each fourth parameter indicates one region radius, and/or each fourth parameter indicates one region level.

Using two fourth parameters as an example, with reference to Table 1, one fourth parameter indicates the region level 1, and the other fourth parameter indicates the region level 2.

It should be noted that, in this application, different fourth parameters correspond to different region levels. The at least two fourth parameters correspond to two or more region levels in the K region levels. In other words, this may be understood as: Each fourth parameter indicates one region level, each fourth parameter indicates a quantity of regions corresponding to one region level, and/or each fourth parameter indicates a region radius corresponding to one region level.

Further, because different region levels are associated with different angle ranges (as enumerated in Table 1), in the at least two fourth parameters, different fourth parameters correspond to different angle ranges. The at least two fourth parameters correspond to two or more angle ranges in K angle ranges.

Further, because different region levels are associated with different geographic ranges (as enumerated in Table 2), in the at least two fourth parameters, different fourth parameters correspond to different geographic ranges. The at least two fourth parameters correspond to two or more geographic ranges in K geographic ranges.

S1312: The network device sends a third parameter to the terminal device. Correspondingly, the terminal device receives the third parameter from the network device.

The third parameter indicates at least one angle range, and each angle range corresponds to one fourth parameter.

For example, using Table 1 as an example, the third parameter indicates two angle ranges: 0≤*θ*<25 and 25≤*θ*<30.

Alternatively, the third parameter indicates at least one geographic range, and each geographic range corresponds to one fourth parameter.

For example, using Table 2 as an example, the third parameter indicates two geographic ranges, for example, a geographic range 1 and a geographic range 2. A longitude of the geographic range 1 is *x*₀ - *x*₁, and a latitude of the geographic range 1 is *y*₀ - *y*₁. A longitude of the geographic range 2 is *x*₁ - *x*₂, and a latitude of the geographic range 2 is *y*₁ - *y*₂.

For example, the third parameter may be carried in one of the following: RRC signaling, DCI, or a MAC-CE.

It should be noted that the third parameter and the fourth parameter may be carried in a same message, or may be carried in different messages. This is not limited in this application.

As shown in a box of a "case 2a" in FIG. 17, if the third parameter indicates the at least one angle range, the terminal device further performs S1321:
S1321: The terminal device obtains a first angle.

The first angle is the elevation angle of the terminal device, or the first angle is a beam steering angle corresponding to the terminal device.

For example, the terminal device obtains the location of the terminal device, and determines the first angle based on the location of the terminal device. For details, refer to a related technology, and the details are not described.

If the third parameter indicates the at least one angle range, the terminal device further performs S1301b:
S1301b: The terminal device determines, based on the at least one angle range indicated by the third parameter and the first angle, the first parameter from the fourth parameter corresponding to the at least one angle range.

For example, if the first angle is within a specific angle range indicated by the third parameter, a fourth parameter corresponding to the angle range is the first parameter.

Using Table 1 as an example, the first angle is 10°, and is within the range of 0≤*θ*<25. In this case, the first parameter is a parameter corresponding to the region level 1.

In other words, if the network device delivers relevant parameters corresponding to a plurality of region levels, the terminal device may perform selection based on the first angle, and perform computing based on the selected first parameter, to help reduce operation complexity of the terminal device.

As shown in a box of a "case 2b" in FIG. 17, if the third parameter indicates the at least one geographic range, the terminal device further performs S1322:
S1322: The terminal device obtains the location of the terminal device.

For example, the terminal device obtains the GNSS location of the terminal device. For details, refer to a related technology, and the details are not described.

If the third parameter indicates the at least one geographic range, the terminal device further performs S1301c:
S1301c: The terminal device determines, based on the at least one geographic range indicated by the third parameter and the location of the terminal device, the first parameter from the fourth parameter corresponding to the at least one geographic range.

For example, if the location of the terminal device is within a specific geographic range indicated by the third parameter, a fourth parameter corresponding to the geographic range is the first parameter.

Using Table 2 as an example, if the location of the terminal device is (*x*₀, *y*₀), in other words, a longitude is *x*₀, and a latitude is *y*₀, the location of the terminal device is within the range of (*x*₀ - *x*₁, *y*₀ - *y*₁). In this case, the first parameter is a parameter corresponding to the region level 1.

In other words, if the network device delivers relevant parameters corresponding to a plurality of region levels, the terminal device may perform selection based on the location of the terminal device, and perform computing based on the selected first parameter, to help reduce operation complexity of the terminal device.

The foregoing describes a process in which the terminal device determines the reference location of the first region.

It should be noted that the reference location of the first region is for assisting the terminal device in communication. It can be understood that the terminal device performs, based on the reference location of the first region, at least one of the following communication processes: initial access, service data transmission, mobility management, interference coordination, and the like.

The following describes the communication process performed by the terminal device based on the reference location of the first region.

### Case 1: Access process in a region-level configuration

An access scenario is described by using an example in which "the foregoing *N*_{*spot*_*k*} regions are broadcast regions, and the first region is the region in which the terminal device is located".

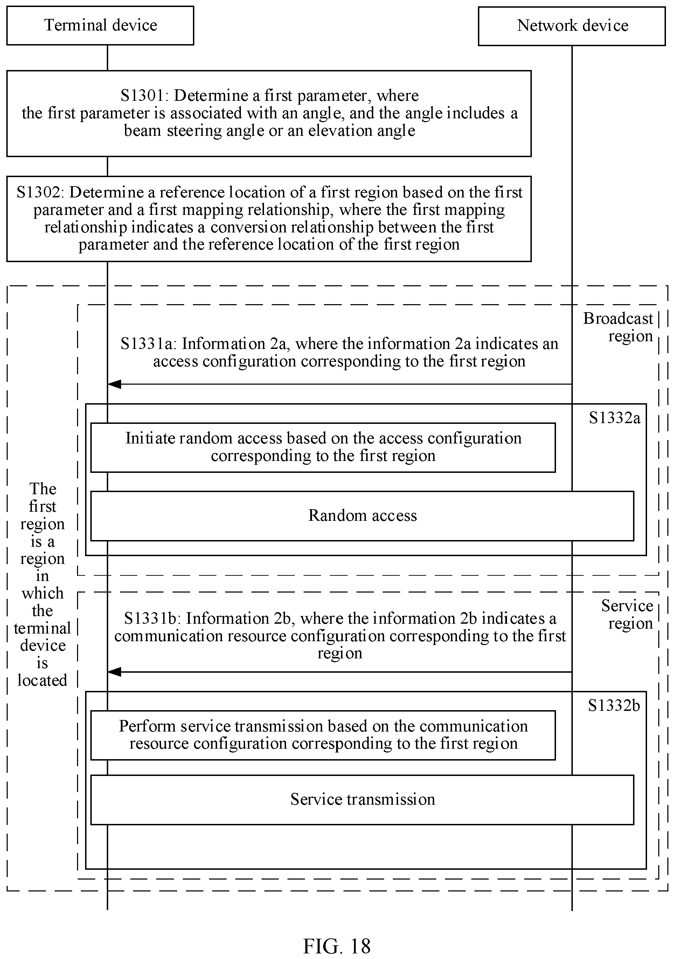

As shown in FIG. 18, the method further includes the following operations.

S1331a: The network device sends information 2a to the terminal device. Correspondingly, the terminal device receives the information 2a from the network device.

The information 2a is described as follows:
The information 2a indicates an access configuration corresponding to the first region. This may be understood as: The information 2a is access information, and indicates a region-level access configuration.

For example, the access configuration includes one or more of the following: a random access channel occasion (random access channel occasion, RO) resource configuration, a preamble (preamble) configuration, a timing advance (timing advance, TA), an accessible time period, or the like.

In a possible example, the information 2a indicates only the access configuration corresponding to the first region, and does not indicate an access configuration corresponding to another region. This may be understood as: The network device delivers access configurations corresponding to different regions in the *N*_{*spot*_*k*} regions. For example, the foregoing *N*_{*spot*_*k*} regions are four regions that are respectively denoted as a region 1, a region 2, a region 3, and a region 4. The network device indicates an access configuration for the region 1 by using information X1, the network device indicates an access configuration for the region 2 by using information X2, the network device indicates an access configuration for the region 3 by using information X3, and the network device indicates an access configuration for the region 4 by using information X4. In this case, if the first region is the region 1, the information 2a is the information X1. Alternatively, if the first region is the region 3, the information 2a is the information X3.

In another possible example, the information 2a indicates access configurations for at least two regions in the foregoing *N*_{*spot*_*k*} regions. This may be understood as: The network device indicates access configurations for at least two regions by using same information. For example, the foregoing *N*_{*spot*_*k*} regions are four regions that are respectively denoted as a region 1, a region 2, a region 3, and a region 4. The region 1 and the region 2 belong to a same cell, and the network device indicates access configurations for the region 1 and the region 2 by using information Y1. The region 3 and the region 4 belong to a same cell, and the network device indicates access configurations for the region 3 and the region 4 by using information Y2. In this case, if the first region is the region 1, the information 2a is the information Y1. Alternatively, if the first region is the region 3, the information 2a is the information Y3.

S1332a: The terminal device initiates random access based on the access configuration corresponding to the first region.

For example, the terminal device determines the access configuration for the first region from the information 2a based on the region identifier of the first region, and initiates the random access based on the access configuration corresponding to the first region.

In this way, when the network device indicates the region-level access configuration (for example, the access configuration for the first region) to the terminal device, the terminal device initiates the random access based on the access configuration for the region in which the terminal device is located, to reduce signaling overheads.

It should be noted that, in a random access initiation scenario, the reduction of the signaling overheads may be reflected as follows:
The region identifier in this application occupies a small quantity of bits. For example, the region identifier may be represented by 8 bits. When the region identifier is transmitted between the terminal device and the network device, a small quantity of communication resources may be occupied, and signaling overheads are low.

In addition, when there are a plurality of region identifiers, this application may be described by using "one region identifier + a quantity of regions", for example, {bw_x0, k0} or {bw_x0, k0+1}, and there is no need to send a region identifier of each region in signaling, to further reduce the signaling overheads.

It should be noted that, in the random access initiation scenario, this application can provide the region-level (namely, beam position-level) access configuration, so that the terminal device can initiate the random access based on the region-level (namely, beam position-level) access configuration. Compared with cell-based random access in a related technology, this application can enable the terminal device to initiate the random access more flexibly.

### Case 2: Data transmission process in a region-level configuration

The data transmission process is described by using an example in which "the foregoing *N*_{*spot*_*k*} regions are service regions, and the first region is the region in which the terminal device is located".

As shown in FIG. 18, the method further includes the following operations.

S1331b: The network device sends information 2b to the terminal device. Correspondingly, the terminal device receives the information 2b from the network device.

The information 2b is described as follows:
The information 2b indicates a communication resource configuration corresponding to the first region. This may be understood as: The information 2b is service resource information, and indicates a region-level communication resource configuration.

For example, the communication resource configuration includes one or more of the following: a frequency resource (for example, a bandwidth part (bandwidth part, BWP)), polarization, an available time period, or the like.

In a possible example, the information 2b indicates only the communication resource configuration corresponding to the first region, and does not indicate a communication resource configuration corresponding to another region. This may be understood as: The network device delivers communication resource configurations for different regions in the *N*_{*spot*_*k*} regions.

In another possible example, the information 2b indicates communication resource configurations for at least two regions in the *N*_{*spot*_*k*} regions. This may be understood as: The network device indicates communication resource configurations for at least two regions by using same information.

S1332b: The terminal device performs service transmission based on the communication resource configuration corresponding to the first region.

For example, the terminal device determines the communication resource configuration for the first region from the information 2b, and performs service transmission based on the communication resource configuration corresponding to the first region.

In this way, when the network device indicates the region-level communication resource configuration (for example, the communication resource configuration for the first region) to the terminal device, the terminal device performs service transmission based on the communication resource configuration for the region in which the terminal device is located, to reduce signaling overheads.

It should be noted that, in a service transmission scenario, the reduction of the signaling overheads may be reflected as follows:
The region identifier in this application occupies a small quantity of bits. For example, the region identifier may be represented by 8 bits. When the region identifier is transmitted between the terminal device and the network device, a small quantity of communication resources may be occupied, and signaling overheads are low.

In addition, when there are a plurality of region identifiers, this application may be described by using "one region identifier + a quantity of regions", for example, {bw_x0, k0} or {bw_x0, k0+1}, and there is no need to send a region identifier of each region in signaling, to further reduce the signaling overheads.

Furthermore, in some embodiments, when the region in which the terminal device is located is the first region, after the terminal device learns of the region identifier of the first region, the terminal device further sends the region identifier of the first region to the network device to replace precise location information of the terminal device, to assist location verification and service resource allocation on a network device side. This further reduces the signaling overheads.

It should be noted that, in the service transmission scenario, this application can provide the region-level (namely, beam position-level) communication resource configuration, so that the terminal device can perform service transmission based on the region-level (namely, beam position-level) communication resource configuration. Compared with cell-based service transmission in a related technology, this application can enable the terminal device to perform service transmission more flexibly.

### Case 3: Mobility management in a region-level configuration

In the case 3, a mobility management scenario is described by using an example in which "the first region is the region in which the terminal device is located".

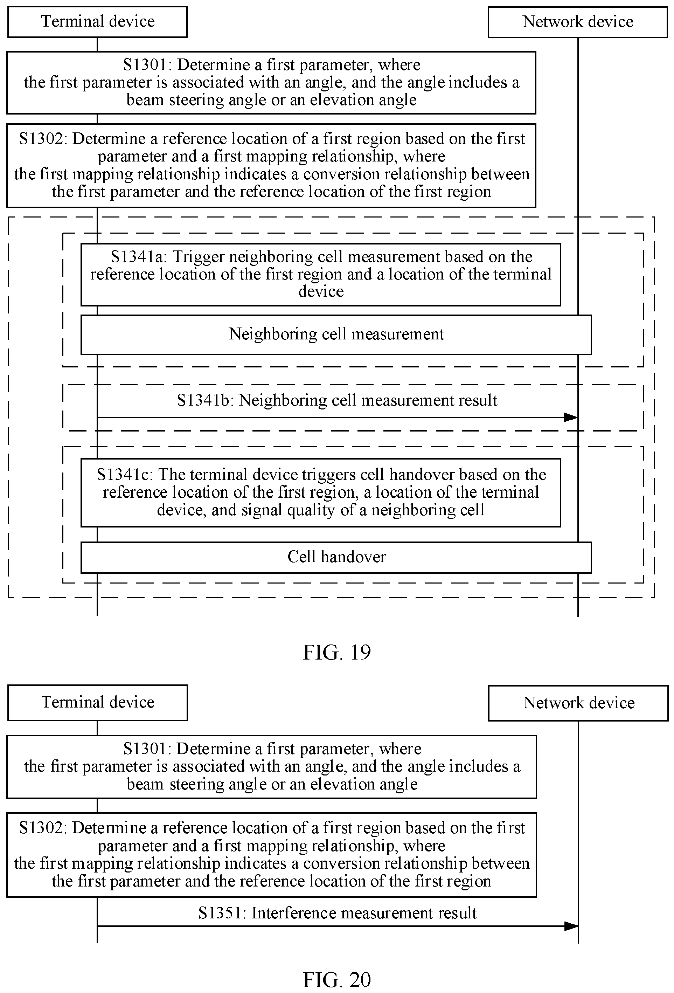

As shown in FIG. 19, in a first possible implementation, the method further includes the following operation:
S1341a: The terminal device triggers neighboring cell measurement based on the reference location of the first region and the location of the terminal device.

For example, the neighboring cell measurement is triggered if a distance between the reference location of the first region and the location of the terminal device is greater than (or equal to) a threshold Y. On the contrary, the neighboring cell measurement is not triggered temporarily if a distance between the reference location of the first region and the location of the terminal device is less than (or equal to) a threshold Y. In this application, using cell reselection as an example, the threshold Y may be understood as a distance threshold for reselection. For example, a value of the threshold Y is k*Region radius.

A neighboring cell measurement result is for cell handover or the cell reselection. For details, refer to a related technology, and the details are not described herein.

In this way, if the reference location of the first region is a reference point, the terminal device determines, based on the reference location of the first region and the location of the terminal device, whether to trigger the neighboring cell measurement. This causes low signaling overheads.

It should be noted that, in the mobility management scenario, for movement of the terminal device, the reduction of the signaling overheads may be reflected as follows:
The terminal device determines, by using the reference location of the region in which the terminal device is located instead of using reference location information (generally, a reference location includes three-dimensional coordinates, and signaling overheads may reach 72 bits) in a conventional technology, whether to trigger the neighboring cell measurement, in other words, the network device does not need to deliver the reference location information. This causes low signaling overheads.

It should be noted that in the mobility management scenario, the terminal device may determine, based on the region (namely, a beam position) in which the terminal device is located, whether to trigger the neighboring cell measurement. Compared with a related technology in which neighboring cell measurement is triggered based on a cell-level reference location, this application can enable the terminal device to trigger the neighboring cell measurement more flexibly.

As shown in FIG. 19, in a second possible implementation, the method further includes the following operation:
S1341b: The terminal device sends a neighboring cell measurement result based on the reference location of the first region and the location of the terminal device.

For example, the neighboring cell measurement result is sent if a distance between the reference location of the first region and the location of the terminal device is greater than (or equal to) a threshold Y. On the contrary, the neighboring cell measurement result is not sent temporarily if a distance between the reference location of the first region and the location of the terminal device is less than (or equal to) a threshold Y.

In this way, if the reference location of the first region is a reference point, the terminal device determines, based on the reference location of the first region and the location of the terminal device, whether to send the neighboring cell measurement result. This causes low signaling overheads.

It should be noted that, in the mobility management scenario, for movement of the terminal device, the reduction of the signaling overheads may be reflected as follows:
The terminal device determines, by using the reference location of the region in which the terminal device is located instead of using reference location information (generally, a reference location includes three-dimensional coordinates, and signaling overheads may reach 72 bits) in a conventional technology, whether to trigger the sending of the neighboring cell measurement result, in other words, the network device does not need to deliver the reference location information. This causes low signaling overheads.

It should be noted that in the mobility management scenario, the terminal device may determine, based on the region (namely, a beam position) in which the terminal device is located, whether to trigger the sending of the neighboring cell measurement result. Compared with a related technology in which sending of a neighboring cell measurement result is triggered based on a cell-level reference location, this application can enable the terminal device to trigger the sending of the neighboring cell measurement result more flexibly.

As shown in FIG. 19, in a third possible implementation, the method further includes the following operation:
S1341c: The terminal device triggers cell handover based on the reference location of the first region, the location of the terminal device, and signal quality of a neighboring cell.

For example, the cell handover is triggered if a distance between the reference location of the first region and the location of the terminal device is greater than (or equal to) a threshold Y and the signal quality of the neighboring cell is greater than (or equal to) a threshold Z. On the contrary, the cell handover is not triggered temporarily if a distance between the reference location of the first region and the location of the terminal device is less than (or equal to) a threshold Y and/or the signal quality of the neighboring cell is less than a threshold Z.

In this way, if the reference location of the first region is a reference point, the terminal device determines, based on the reference location of the first region, the location of the terminal device, and the signal quality of the neighboring cell, whether to trigger the cell handover. This causes low signaling overheads.

It should be noted that, in the mobility management scenario, for movement of the terminal device, the reduction of the signaling overheads may be reflected as follows:
The terminal device determines, by using the reference location of the region in which the terminal device is located instead of using reference location information (generally, a reference location includes three-dimensional coordinates, and signaling overheads may reach 72 bits) in a conventional technology, whether to trigger the cell handover, in other words, the network device does not need to deliver the reference location information. This causes low signaling overheads.

It should be noted that in the mobility management scenario, the terminal device may determine, based on the region (namely, a beam position) in which the terminal device is located, whether to trigger the cell handover. Compared with a related technology in which cell handover is triggered based on a cell-level reference location, this application can enable the terminal device to trigger the cell handover more flexibly.

It should be noted that, in the mobility management scenario, the foregoing threshold (for example, the threshold Y and/or the threshold Z) may be a preconfigured parameter, or may be a parameter configured by the network device. This is not limited in this application.

It is easy to understand that, in the case 3, when the cell handover is triggered based on neighboring cell measurement, operations performed by a target network device (for example, a target satellite) and a source network device (for example, a source satellite) include the following:
The target network device (for example, the target satellite) includes a region identifier (namely, a beam position ID) in a physical downlink control channel (physical downlink control channel, PDCCH). The terminal device determines a region closest to the terminal device, and obtains information about the PDCCH based on a region identifier of the closest region. If the information is successfully obtained, access to the target network device (for example, the target satellite) is initiated on a resource indicated by the PDCCH. The resource indicated by the PDCCH includes one or more of the following: an ID of a target beam, a RO resource, a dedicated preamble, or the like. The target beam may be a beam corresponding to a handover-specific broadcast signal (a handover synchronization signal block, an HO-SSB).

The source network device (for example, the source satellite) includes different region identifiers (namely, beam position IDs) in a MAC-CE header. The terminal device determines the region in which the terminal device is located, and determines, based on a region identifier of the region, whether to receive a MAC-CE. If the MAC-CE is received, the terminal device accesses the target network device (for example, the target satellite) based on a device identifier (for example, a UE-ID) of the terminal device on a resource indicated by the MAC-CE. The resource indicated by the MAC-CE includes one or more of the following: an identifier of the target network device (for example, an ID of the target satellite), an ID of a target beam, a RO resource, a dedicated preamble, or the like.

### Case 4: Interference coordination in a region-level configuration

In the case 4, an interference coordination process is described by using an example in which "the first region is the region in which the terminal device is located, and the first region belongs to a first cell".

As shown in FIG. 20, the method further includes the following operation:
S1351: The terminal device sends an interference measurement result to the network device. Correspondingly, the network device receives the interference measurement result from the terminal device.

For example, the terminal device performs interference measurement on a channel state information-interference measurement (channel state information-interference measurement, CSI-IM) resource to obtain the interference measurement result, to obtain strength of interference from another cell to the first cell. For details, refer to a related technology, and the details are not described.

Optionally, if the terminal device is located in the first region, and performs measurement in the first region to obtain the interference measurement result, the interference measurement result may further indicate the first region (for example, the interference measurement result includes the region identifier of the first region), so that the network device learns of a cell corresponding to the interference measurement result.

Optionally, if the interference measurement result is strength of interference from the another cell to the first cell in a first time period, the interference measurement result further indicates the first time period, so that the network device learns of a time period corresponding to the interference measurement result.

In this way, the network device may perform interference coordination based on the received interference measurement result.

The communication method 1300 in this application is described above by using an example in which one beam corresponds to one region and region radii at different levels (for example, region levels) are different.

The following provides descriptions by using an example in which one beam corresponds to one or more regions and region radii at different levels (for example, beam levels) are the same.

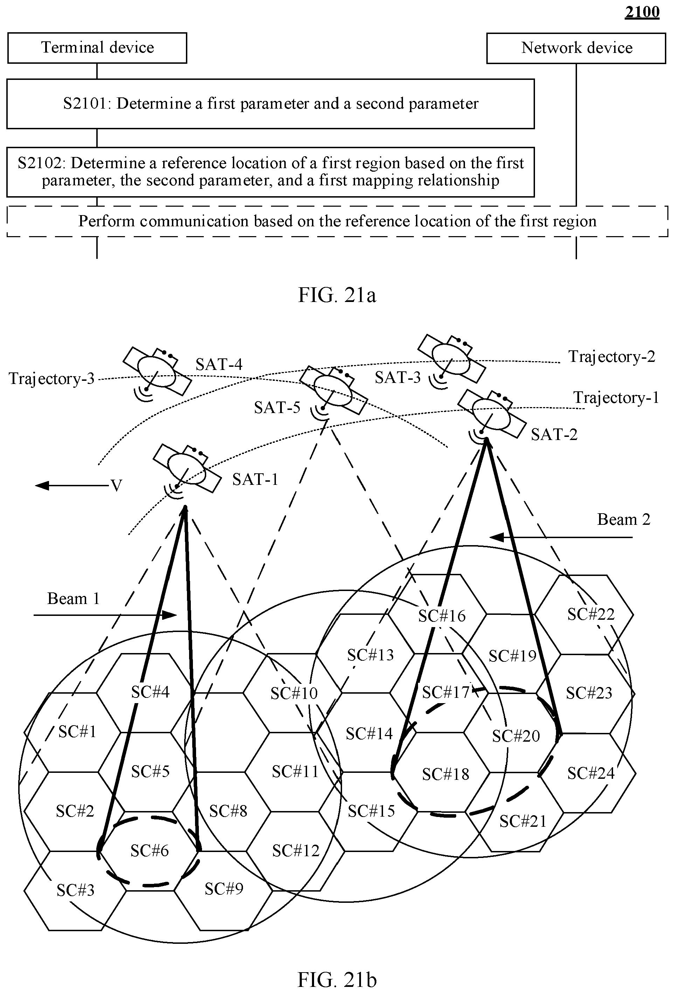

As shown in FIG. 21a, a communication method 2100 according to an embodiment of this application includes the following operations.

S2101: A terminal device determines a first parameter and a second parameter.

The parameters are described as follows:
The first parameter indicates a first beam level, and each beam at the first beam level covers L regions among X regions, where X and L are positive integers. The first beam level is determined based on an angle, and the angle includes a beam steering angle or an elevation angle. For details, refer to the related descriptions in Table 1, and the details are not described again. The second parameter indicates a quantity X of regions.

Using an example in which one beam covers one or more regions, Table 3 enumerates an association relationship among a beam level, a beam size, and a beam steering angle.

**Table 3**

| Beam level | Beam steering angle *θ* (unit: degree) | Beam size (unit: km) |
|---|---|---|
| 1 | 0≤*θ*<25 | 1 ** R_{spot_k}* |
| 2 | 25≤*θ*<30 | 2 ** R_{spot_k}* |
| ... | ... | ... |
| K (K≥2) | 45≤*θ*<50 | *K * R_{spot_k}* |

In Table 3, K is a positive integer greater than or equal to 2.

As enumerated in Table 3, a smaller beam steering angle indicates a smaller beam size of each beam. When a radius of each region is fixed, a quantity of regions covered by each beam is smaller. Using FIG. 21b as an example, the beam may be a beam 1, and the beam 1 covers one region, namely, a region SC#6.

As enumerated in Table 3, a larger beam steering angle indicates a larger beam size of each beam. When a radius of each region is fixed, a quantity of regions covered by each beam is larger. Using FIG. 21b as an example, the beam may be a beam 2, and the beam 2 covers two regions, namely, regions SC#18 and SC#20.

It is easy to understand that the beam level is associated with the angle, and different beam levels are associated with different angle ranges.

Alternatively, the beam level is associated with a location, and different beam levels are associated with different locations. The location is determined based on the angle (for example, the beam steering angle). The location may be understood as a location of a geographic region covered by one or more beams within a specific angle range of the beam steering angle.

Still using Table 3 as an example, when the range of the beam steering angle is 0≤*θ*<25, a beam in the range of the beam steering angle covers a specific geographic region, and the geographic region may be represented by a longitude or a latitude. For example, a longitude range of the geographic region is *x*₀ *- x*₁, and a latitude range of the geographic region is *y*₀ - *y*₁.

Still using Table 3 as an example, when the range of the beam steering angle is 25≤*θ*<30, a beam in the range of the beam steering angle covers a specific geographic region, and the geographic region may be represented by a longitude or a latitude. For example, a longitude range of the geographic region is *x*₁ *- x*₂, and a latitude range of the geographic region is *y*₁ - *y*₂.

It is easy to understand that the "beam steering angle" in Table 3 may be replaced with the "location", as enumerated in Table 4:

**Table 4**

| Beam level | Location (longitude, latitude) | Beam size (unit: km) |
|---|---|---|
| 1 | *x*₀ - *x*₁, *y*₀ - *y*₁ | 1 ** R_{spot_k}* |
| 2 | *x*₁ - *x*₂, *y*₁ - *y*₂ | 2 ** R_{spot_k}* |
| ... | ... | ... |
| K (K≥2) | *x*_{*K*-1} - *x_{K}*, *y*_{*K*-1} - *y_{K}* | *K * R_{spot_k}* |

It should be noted that in this application, a region radius and a quantity of regions satisfy a specific association relationship. For example, the region radius and the quantity of regions satisfy the following formula (7): ${N}_{spot} = \frac{8 {πR}_{e}^{2}}{3 \sqrt{3} {R}_{spot}^{2}}$ formula (7) where *Nₛₚₒₜ* represents the quantity of regions, *Rₛₚₒₜ* represents the region radius, and *Rₑ* represents a parameter of an earth surface on which *Nₛₚₒₜ* regions are located. For details, refer to the descriptions of the formula (1), and the details are not described again.

Optionally, the second parameter includes the quantity of regions, for example, denoted as *Nₛₚₒₜ*.

Optionally, the second parameter indicates the region radius, for example, denoted as *Rₛₚₒₜ*. The terminal device may determine the quantity of regions based on the region radius indicated by the second parameter and the formula (7).

Optionally, the first parameter includes a level identifier, for example, *k*, of the first beam level.

For the terminal device, after determining the first parameter and the second parameter, the terminal device performs S2102:
S2102: The terminal device determines a reference location of a first region based on the first parameter, the second parameter, and a first mapping relationship.

For example, the terminal device determines the reference location of the first region based on the first beam level indicated by the first parameter, the quantity of regions that is indicated by the second parameter, and the first mapping relationship.

Optionally, the first mapping relationship satisfies the following formula (8): $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot}}\right)$ where *RL*(*k, i*) represents three-dimensional coordinates corresponding to the reference location of the first region, *k* represents the identifier of the first beam level, *i* represents a region identifier of the first region, *i* is a non-negative integer less than *Nₛₚₒₜ*, *Rₑ* represents a parameter of an earth surface on which the first region is located, *Nₛₚₒₜ* represents the quantity of regions, and [ ] represents a fractional part operator.

It is easy to understand that, in this application, when a region label or a region number is used as a region identifier, each value in {0, ··· , *Nₛₚₒₜ -* 1} may be traversed for *i* according to the foregoing formula (8). Correspondingly, the terminal device may obtain a reference location of each region in the *Nₛₚₒₜ* regions according to the foregoing formula (8).

Further, that *i* represents the region identifier of the first region (for example, *i* is a region label of the first region, and identifies the first region) may be understood as: Each region in the *Nₛₚₒₜ* regions may be considered as a first region. Correspondingly, the terminal device may traverse each first region in the *Nₛₚₒₜ* regions according to the foregoing formula (8), to obtain the reference location of each first region in the *Nₛₚₒₜ* regions.

It is easy to understand that, in a possible equivalent conversion form, the foregoing formula (8) may be equivalently converted into a longitude-latitude location.

For example, a projection of *RL(k, i)* on a unit square (unit square) is *RL*(*k, xᵢ, yᵢ*). The unit square is a square whose corners are at four points (0, 0), (1, 0), (0, 1), and (1, 1) on a Cartesian plane.

In other words, the first mapping relationship satisfies the following formula (9): $RL \left(k, {x}_{i}\right) = \left(1-{cosθ}_{i}\right) / 2$ $RL \left(k, {y}_{i}\right) = {φ}_{i} {\left(2π\right)}^{- 1}$ ${φ}_{i} = 2 π \left[\frac{2 i}{1 + \sqrt{5}}\right]$ ${θ}_{i} = {cos}^{- 1} \left(1-\frac{2 i + 1}{{N}_{spot}}\right) , i ∈ \left\{0,⋯,{N}_{spot}-1\right\}$ where *RL*(*k, xᵢ*) represents a horizontal coordinate of a projection of the reference location of the first region on a unit square on which the reference location is located, *RL*(*k, yᵢ*) represents a vertical coordinate of the projection of the reference location of the first region on the unit square on which the reference location is located, *i* represents a region identifier of the first region, *i* is a non-negative integer less than *Nₛₚₒₜ*, *Nₛₚₒₜ* represents the quantity of regions, and [ ] represents a fractional part operator.

It is easy to understand that, in another possible equivalent conversion form, the foregoing formula (8) may use Cartesian coordinates *RL*(*xᵢ, yᵢ*) of a Fibonacci lattice. In other words, the first mapping relationship satisfies the following formula (10): $RL \left(k, {x}_{i}\right) = i / {N}_{spot}$ $RL \left(k, {y}_{i}\right) = frac \left(\frac{i}{∅}\right)$ $∅ = \frac{1 + \sqrt{5}}{2}$ where *RL*(*k, xᵢ*) represents a horizontal coordinate of the reference location of the first region in Cartesian coordinates, *RL*(*k, yᵢ*) represents a vertical coordinate of the reference location of the first region in the Cartesian coordinates, *i* represents a region identifier of the first region, *i* is a non-negative integer less than *Nₛₚₒₜ*, *Nₛₚₒₜ* represents the quantity of regions, and *frac*() represents a fractional part operator.

For example, the first mapping relationship satisfies the following formula (11): $RL \left(k, i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot}} - 1$ $∅ = \frac{1 + \sqrt{5}}{2}$ where *RL*(*k, i*) represents three-dimensional coordinates corresponding to the reference location of the first region, *k* represents the identifier of the first beam level, *i* represents a region identifier of the first region, *i* is a non-negative integer less than *Nₛₚₒₜ*, *Rₑ* represents a parameter of an earth surface on which the first region is located, and *Nₛₚₒₜ* represents the quantity of regions.

For example, the first mapping relationship satisfies the following formula (12): $RL \left(k, i\right) = \left(lon\left(k, i\right),lat\left(k, i\right)\right)$ $lon \left(k, i\right) = {sin}^{- 1} \left(\frac{2 i}{2 N + 1}\right)$ $lat \left(k, i\right) = 2 πi {∅}^{- 1}$ $\begin{matrix}{N}_{spot} = 2 N + 1 \\ ∅ = \frac{1 + \sqrt{5}}{2}\end{matrix}$ where *RL*(*k, i*) represents the reference location of the first region, *lon*(*k, i*) represents a longitude corresponding to the reference location of the first region, *lat*(*k, i*) represents a latitude corresponding to the reference location of the first region, *k* represents the identifier of the first beam level, *i* represents a region identifier of the first region, *i* is a non-negative integer less than *Nₛₚₒₜ*, and *Nₛₚₒₜ* represents the quantity of regions.

It should be noted that a unit of the longitude *lon*(*k*, *i*) corresponding to the reference location of the first region may be a radian. Similarly, a unit of the latitude lat(*k*, *i*) corresponding to the reference location of the first region may also be a radian.

The first region is described as follows:
Example 1: The first region is any region in the *Nₛₚₒₜ* regions.

In this case, because the parameter *i* is traversed from 1 to *Nₛₚₒₜ* in the foregoing formula (8) to formula (12), the terminal device may learn of a reference location of any region in the *Nₛₚₒₜ* regions according to the foregoing formulas. In other words, the terminal device may learn of a topology status of the *Nₛₚₒₜ* regions, a coverage status of the *Nₛₚₒₜ* regions, an adjacency relationship between different regions in the *Nₛₚₒₜ* regions, or the like.

It is easy to understand that the example 1 may be understood as: The terminal device may determine a reference location of each region in the *Nₛₚₒₜ* regions. Further, the terminal device obtains a location of the terminal device, and determines, based on the location of the terminal device and the reference location of the first region, a reference location of a region in which the terminal device is located. For details, refer to the descriptions in FIG. 15, and the details are not described again.

Example 2: The first region is a region indicated by the network device by using the region identifier.

In the example 2, the terminal device obtains the region identifier, and determines the reference location of the first region based on the region identifier, the first parameter, the second parameter, and the first mapping relationship. For details, refer to the descriptions in FIG. 16a, and the details are not described again.

In the communication method 2100 in this application, because the first mapping relationship can indicate a conversion relationship between the reference location of the first region and both the first beam level and the quantity of regions, the first parameter indicates the first beam level, and the second parameter indicates the quantity of regions, when the terminal device has determined the first parameter and the second parameter, the terminal device may determine the reference location of the first region based on the first parameter, the second parameter, and the first mapping relationship.

Because the first parameter is associated with the angle, the first region may be regions covered by beams with different beam steering angles, or the first region may be regions at different elevation angles of the terminal device, to be specific, a radius of the first region may have a plurality of values. Compared with an H3 geographic grid-based method that supports only 16 region radii, this application can adapt to regions with different radii. In other words, even for regions with different radii, the terminal device may determine the reference location of the first region based on the first parameter, the second parameter, and the first mapping relationship, to improve region determining flexibility of the terminal device.

Furthermore, because the reference location of the first region may be determined by using the first parameter and the second parameter, the terminal device and a network device may interact based on the first parameter and the second parameter. A quantity of bits needed for indicating the first parameter and the second parameter is smaller than that needed for communicating a contour of a region covered by a beam, a beam-position reference location in an H3 geographic grid, or the like. Therefore, signaling overheads are lower.

In addition, the terminal device may perform communication based on the reference location of the first region. For example, when the first region is an active region of the network device, if the terminal device is located in the first region, the terminal device may communicate with the network device, to help improve communication effectiveness.

It should be noted that, as enumerated in Table 3 (or Table 4), at least one beam level is defined in this application. For the network device, the network device may deliver a parameter corresponding to a specific beam level. For example, the network device has learned of an elevation angle of the terminal device, and delivers a beam level corresponding to the elevation angle. Alternatively, the network device may deliver a plurality of beam levels. Correspondingly, the terminal device may receive the specific beam level, or may receive the plurality of beam levels. Next, an implementation process of S2101 is described by using two cases (the following case 1 and case 2).

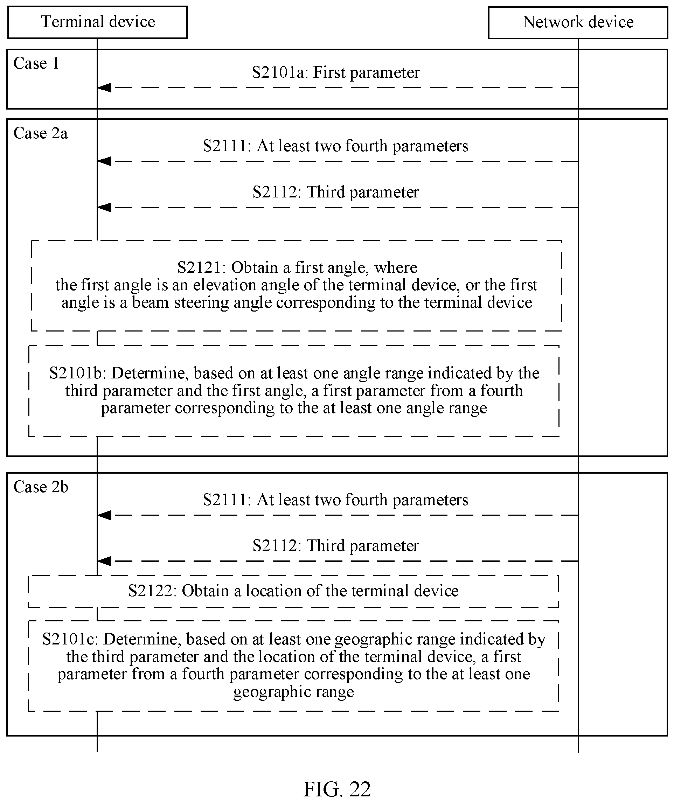

Case 1: As shown in FIG. 22, S2101 includes S2101a:
S2101a: The network device sends the first parameter to the terminal device. Correspondingly, the terminal device receives the first parameter from the network device.

The first parameter indicates the first beam level, and the first beam level is associated with the elevation angle of the terminal device. For example, the elevation angle of the terminal device is within an angle range corresponding to the first beam level.

Case 2: As shown in FIG. 22, S2101 includes S2101b or S2101c, and the terminal device further performs S2111 and S2112. Details are described as follows:
S2111: The network device sends at least two fourth parameters to the terminal device. Correspondingly, the terminal device receives the at least two fourth parameters from the network device.

In the at least two fourth parameters, each fourth parameter indicates one beam level.

Using two fourth parameters as an example, with reference to Table 3, one fourth parameter indicates the beam level 1, and the other fourth parameter indicates the beam level 2.

It should be noted that, in this application, different fourth parameters correspond to different beam levels. The at least two fourth parameters correspond to two or more beam levels in K beam levels. In other words, this may be understood as: Each fourth parameter indicates one beam level.

Further, because different beam levels are associated with different angle ranges (as enumerated in Table 3), in the at least two fourth parameters, different fourth parameters correspond to different angle ranges. The at least two fourth parameters correspond to two or more angle ranges in K angle ranges.

Further, because different beam levels are associated with different geographic ranges (as enumerated in Table 4), in the at least two fourth parameters, different fourth parameters correspond to different geographic ranges. The at least two fourth parameters correspond to two or more geographic ranges in K geographic ranges.

S2112: The network device sends a third parameter to the terminal device. Correspondingly, the terminal device receives the third parameter from the network device.

The third parameter indicates at least one angle range, and each angle range corresponds to one fourth parameter.

For example, using Table 3 as an example, the third parameter indicates two angle ranges: 0≤*θ*<25 and 25≤*θ*<30.

Alternatively, the third parameter indicates at least one geographic range, and each geographic range corresponds to one fourth parameter.

For example, using Table 4 as an example, the third parameter indicates two geographic ranges, for example, a geographic range 1 and a geographic range 2. A longitude of the geographic range 1 is *x*₀ - *x*₁, and a latitude of the geographic range 1 is *y*₀ - *y*₁. A longitude of the geographic range 2 is *x*₁ - *x*₂, and a latitude of the geographic range 2 is *y*₁ - *y*₂.

For example, the third parameter may be carried in one of the following: RRC signaling, DCI, or a MAC-CE.

It should be noted that the third parameter and the fourth parameter may be carried in a same message, or may be carried in different messages. This is not limited in this application.

As shown in a box of a "case 2a" in FIG. 22, if the third parameter indicates the at least one angle range, the terminal device further performs S2121:
S2121: The terminal device obtains a first angle.

The first angle is the elevation angle of the terminal device, or the first angle is a beam steering angle corresponding to the terminal device.

For example, the terminal device obtains the location of the terminal device, and determines the first angle based on the location of the terminal device. For details, refer to a related technology, and the details are not described.

If the third parameter indicates the at least one angle range, the terminal device further performs S2101b:
S2101b: The terminal device determines, based on the at least one angle range indicated by the third parameter and the first angle, the first parameter from the fourth parameter corresponding to the at least one angle range.

For example, if the first angle is within a specific angle range indicated by the third parameter, a fourth parameter corresponding to the angle range is the first parameter.

Using Table 3 as an example, the first angle is 10°, and is within the range of 0≤*θ*<25. In this case, the first parameter is a parameter corresponding to the beam level 1.

In other words, if the network device delivers a plurality of beam levels, the terminal device may perform selection based on the first angle, and perform computing based on the selected first parameter, to help reduce operation complexity of the terminal device.

As shown in a box of a "case 2b" in FIG. 22, if the third parameter indicates the at least one geographic range, the terminal device further performs S2122:
S2122: The terminal device obtains the location of the terminal device.

For example, the terminal device obtains a GNSS location of the terminal device. For details, refer to a related technology, and the details are not described.

If the third parameter indicates the at least one geographic range, the terminal device further performs S2101c:
S2101c: The terminal device determines, based on the at least one geographic range indicated by the third parameter and the location of the terminal device, the first parameter from the fourth parameter corresponding to the at least one geographic range.

For example, if the location of the terminal device is within a specific geographic range indicated by the third parameter, a fourth parameter corresponding to the geographic range is the first parameter.

Using Table 4 as an example, if the location of the terminal device is (*x*₀, *y*₀), in other words, a longitude is *x*₀, and a latitude is *y*₀, the location of the terminal device is within the range of (*x*₀ - *x*₁, *y*₁ - *y*₁). In this case, the first parameter is a parameter corresponding to the beam level 1.

In other words, if the network device delivers a plurality of beam levels, the terminal device may perform selection based on the location of the terminal device, and perform computing based on the selected first parameter, to help reduce operation complexity of the terminal device.

The foregoing describes a process in which the terminal device determines the reference location of the first region.

It should be noted that the reference location of the first region is for assisting the terminal device in communication. It can be understood that the terminal device performs, based on the reference location of the first region, at least one of the following communication processes: initial access, service data transmission, mobility management, interference coordination, and the like.

The following describes the communication process performed by the terminal device based on the reference location of the first region.

### Case 1: Access process in a beam-level configuration

An access scenario is described by using an example in which "the foregoing *Nₛₚₒₜ* regions are broadcast regions, and the first region is the region in which the terminal device is located".

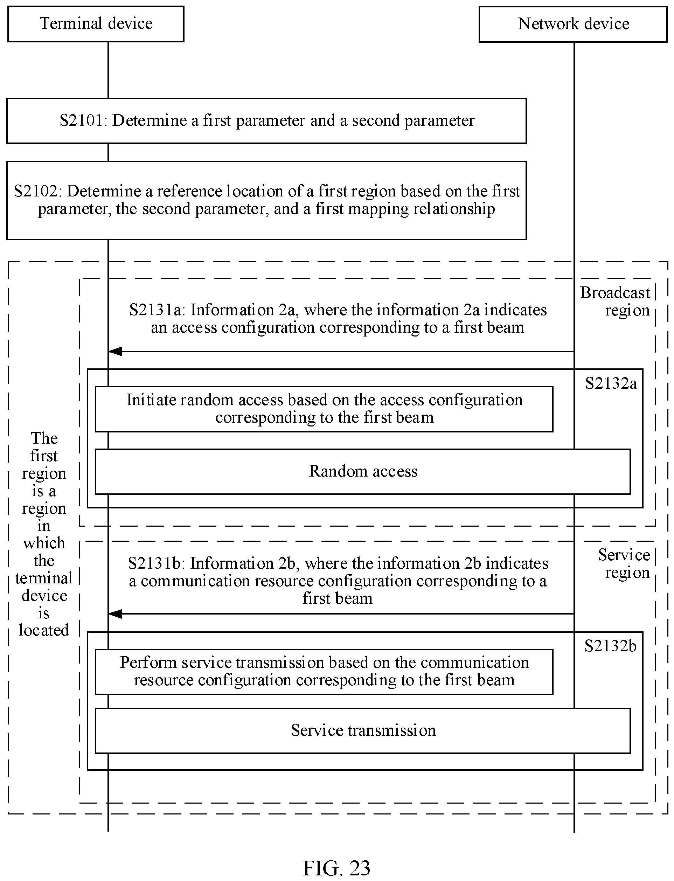

As shown in FIG. 23, the method further includes the following operations.

S2131a: The network device sends information 2a to the terminal device. Correspondingly, the terminal device receives the information 2a from the network device.

The information 2a is described as follows:
The information 2a indicates an access configuration corresponding to a first beam. This may be understood as: The information 2a is access information, and indicates a beam-level access configuration. The first beam is a beam that covers the first region, and a level of the first beam is the first beam level.

For the access configuration, refer to the descriptions in FIG. 18. Details are not described again.

S2132a: The terminal device initiates random access based on the access configuration corresponding to the first beam.

For example, the terminal device determines the first beam based on the region identifier of the first region, determines the access configuration for the first beam from the information 2a, and initiates the random access based on the access configuration corresponding to the first beam.

In this way, when the network device indicates the beam-level access configuration (for example, the access configuration for the first beam) to the terminal device, the terminal device initiates the random access based on the access configuration for the beam corresponding to the region in which the terminal device is located, to reduce signaling overheads.

In addition, in a random access initiation scenario, this application can provide the beam-level access configuration, so that the terminal device can initiate the random access based on the beam-level access configuration. Compared with cell-based random access in a related technology, this application can enable the terminal device to initiate the random access more flexibly.

It should be noted that, in this application, a region covered by the first beam is indicated by using the first mapping relationship. The region covered by the first beam includes the first region. In this way, the terminal device may obtain, based on the first mapping relationship, the first beam corresponding to the first region.

The first mapping relationship may be preconfigured, or may be configured by the network device. This is not limited in this application.

### Case 2: Data transmission process in a beam-level configuration

The data transmission process is described by using an example in which "the foregoing *Nₛₚₒₜ* regions are service regions, and the first region is the region in which the terminal device is located".

As shown in FIG. 23, the method further includes the following operations.

S2131b: The network device sends information 2b to the terminal device. Correspondingly, the terminal device receives the information 2b from the network device.

The information 2b is described as follows:
The information 2b indicates a communication resource configuration corresponding to a first beam. This may be understood as: The information 2b is service resource information, and indicates a beam-level communication resource configuration.

For the communication resource configuration, refer to the descriptions in FIG. 18. Details are not described again.

S2132b: The terminal device performs service transmission based on the communication resource configuration corresponding to the first beam.

For example, the terminal device determines the first beam based on the region identifier of the first region. The terminal device determines the communication resource configuration for the first beam from the information 2b, and performs service transmission based on the communication resource configuration corresponding to the first beam.

In this way, when the network device indicates the beam-level communication resource configuration (for example, the communication resource configuration for the first beam) to the terminal device, the terminal device performs service transmission based on the communication resource configuration for the beam corresponding to the region in which the terminal device is located, to reduce signaling overheads.

It should be noted that, in a service transmission scenario, this application can provide the beam-level communication resource configuration, so that the terminal device can perform service transmission based on the beam-level communication resource configuration. Compared with cell-based service transmission in a related technology, this application can enable the terminal device to perform service transmission more flexibly.

### Case 3: Mobility management in a beam-level configuration

In the case 3, a mobility management scenario is described by using an example in which "the first region is the region in which the terminal device is located".

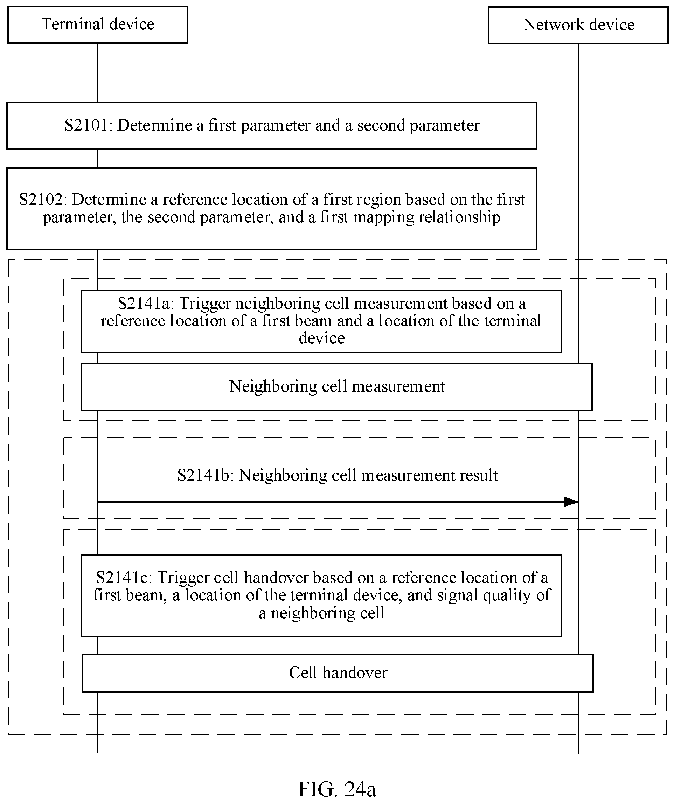

As shown in FIG. 24a, in a first possible implementation, the method further includes the following operation:
S2141a: The terminal device triggers neighboring cell measurement based on a reference location of the first beam and the location of the terminal device.

For example, the neighboring cell measurement is triggered if a distance between the reference location of the first beam and the location of the terminal device is greater than (or equal to) a threshold Y. On the contrary, the neighboring cell measurement is not triggered temporarily if a distance between the reference location of the first beam and the location of the terminal device is less than (or equal to) a threshold Y.

A neighboring cell measurement result is for cell handover or cell reselection. For details, refer to a related technology, and the details are not described herein.

In this way, if the reference location of the first beam is a reference point, the terminal device determines, based on the reference location of the first beam and the location of the terminal device, whether to trigger the neighboring cell measurement. This causes low signaling overheads.

It should be noted that, in the mobility management scenario, for movement of the terminal device, the reduction of the signaling overheads may be reflected as follows:
The terminal device determines, by using the reference location of the beam (the beam corresponding to the region in which the terminal device is located) instead of using reference location information (generally, a reference location includes three-dimensional coordinates, and signaling overheads may reach 72 bits) in a conventional technology, whether to trigger the neighboring cell measurement, in other words, the network device does not need to deliver the reference location information. This causes low signaling overheads.

It should be noted that in the mobility management scenario, the terminal device may determine, based on the reference location of the beam, whether to trigger the neighboring cell measurement. Compared with a related technology in which neighboring cell measurement is triggered based on a cell-level reference location, this application can enable the terminal device to trigger the neighboring cell measurement more flexibly.

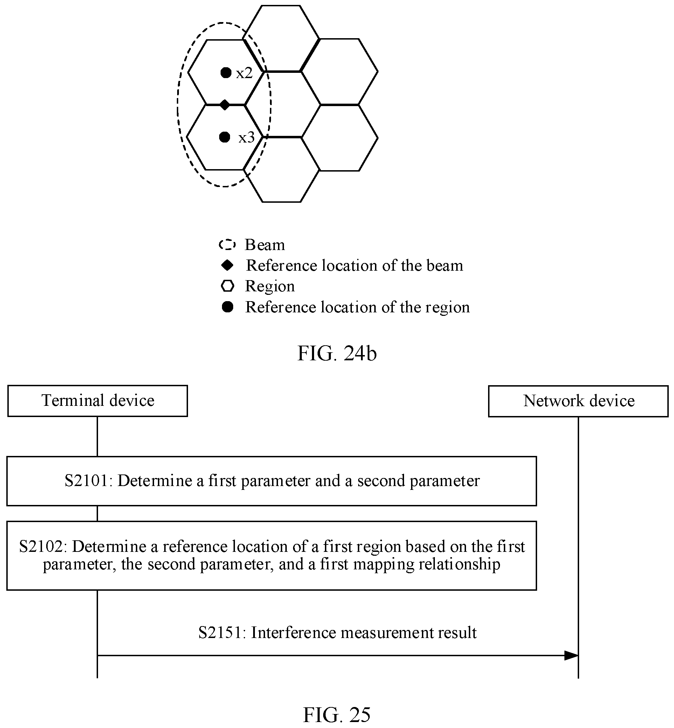

It should be noted that, in this application, a process of determining the reference location of the first beam may be described as follows:
The terminal device determines the first beam based on the first region and the first mapping relationship. The reference location of the first beam may be the reference location of the first region. Alternatively, the reference location of the first beam is determined based on a reference location of each region in the first beam. For example, as shown in FIG. 24b, the first beam includes two regions, namely, a region X2 and a region X3. The reference location of the first beam is a center point between a reference location of the region X2 and a reference location of the region X3. Certainly, the reference location of the first beam may alternatively be determined in another manner. This is not limited in this application.

As shown in FIG. 24a, in a second possible implementation, the method further includes the following operation:
S2141b: The terminal device sends a neighboring cell measurement result based on a reference location of the first beam and the location of the terminal device.

For example, the neighboring cell measurement result is sent if a distance between the reference location of the first beam and the location of the terminal device is greater than (or equal to) a threshold Y. On the contrary, the neighboring cell measurement result is not sent temporarily if a distance between the reference location of the first beam and the location of the terminal device is less than (or equal to) a threshold Y.

In this way, if the reference location of the first beam is a reference point, the terminal device determines, based on the reference location of the first beam and the location of the terminal device, whether to send the neighboring cell measurement result. This causes low signaling overheads.

It should be noted that, in the mobility management scenario, for movement of the terminal device, the reduction of the signaling overheads may be reflected as follows:
The terminal device determines, by using the reference location of the beam instead of using reference location information (generally, a reference location includes three-dimensional coordinates, and signaling overheads may reach 72 bits) in a conventional technology, whether to trigger the sending of the neighboring cell measurement result, in other words, the network device does not need to deliver the reference location information. This causes low signaling overheads.

It should be noted that in the mobility management scenario, the terminal device may determine, based on the reference location of the beam, whether to trigger the sending of the neighboring cell measurement result. Compared with a related technology in which sending of a neighboring cell measurement result is triggered based on a cell-level reference location, this application can enable the terminal device to trigger the sending of the neighboring cell measurement result more flexibly.

As shown in FIG. 24a, in a third possible implementation, the method further includes the following operation:
S2141c: The terminal device triggers cell handover based on a reference location of the first beam, the location of the terminal device, and signal quality of a neighboring cell.

For example, the cell handover is triggered if a distance between the reference location of the first beam and the location of the terminal device is greater than (or equal to) a threshold Y and the signal quality of the neighboring cell is greater than (or equal to) a threshold Z. On the contrary, the cell handover is not triggered temporarily if a distance between the reference location of the first beam and the location of the terminal device is less than (or equal to) a threshold Y and/or the signal quality of the neighboring cell is less than a threshold Z.

In this way, if the reference location of the first beam is a reference point, the terminal device determines, based on the reference location of the first beam, the location of the terminal device, and the signal quality of the neighboring cell, whether to trigger the cell handover. This causes low signaling overheads.

It should be noted that, in the mobility management scenario, for movement of the terminal device, the reduction of the signaling overheads may be reflected as follows:
The terminal device determines, by using the reference location of the beam instead of using reference location information (generally, a reference location includes three-dimensional coordinates, and signaling overheads may reach 72 bits) in a conventional technology, whether to trigger the cell handover, in other words, the network device does not need to deliver the reference location information. This causes low signaling overheads.

It should be noted that in the mobility management scenario, the terminal device may determine, based on the reference location of the beam, whether to trigger the cell handover. Compared with a related technology in which cell handover is triggered based on a cell-level reference location, this application can enable the terminal device to trigger the cell handover more flexibly.

It should be noted that, in the mobility management scenario, the foregoing threshold (for example, the threshold Y and/or the threshold Z) may be a preconfigured parameter, or may be a parameter configured by the network device. This is not limited in this application.

### Case 4: Interference coordination in a beam-level configuration

In the case 4, an interference coordination process is described by using an example in which "the first region is the region in which the terminal device is located, and the first region belongs to a first cell".

As shown in FIG. 25, the method further includes the following operation:
S2151: The terminal device sends an interference measurement result to the network device. Correspondingly, the network device receives the interference measurement result from the terminal device.

For example, the terminal device performs interference measurement on a CSI-IM resource to obtain the interference measurement result, to obtain strength of interference from another cell to the first cell. For details, refer to a related technology, and the details are not described.

Optionally, if the terminal device is located in the first region, and performs measurement in the first region to obtain the interference measurement result, the interference measurement result may further indicate a beam corresponding to the first region, namely, the first beam, so that the network device learns of a beam corresponding to the interference measurement result. For example, the interference measurement result includes a beam identifier of the first beam.

Optionally, if the interference measurement result is strength of interference from the another cell to the first cell in a first time period, the interference measurement result further indicates the first time period, so that the network device learns of a time period corresponding to the interference measurement result.

In this way, the network device may perform interference coordination based on the received interference measurement result.

The communication method 2100 in this application is described above by using an example in which one beam corresponds to one or more regions and region radii at different levels (for example, beam levels) are the same.

It is easy to understand that in this application, beam-level communication is used as an example for description. The foregoing beam-level communication may alternatively be replaced with cell-level communication. An example in which the first cell includes the first region is used:
In the access process, the access configuration corresponding to the first beam may be replaced with an access configuration corresponding to the first cell. For another processing process, refer to the descriptions in FIG. 23.

In the data transmission process, the communication resource configuration corresponding to the first beam may be replaced with a communication resource configuration corresponding to the first cell. For another processing process, refer to the descriptions in FIG. 24.

In a mobility management process, the reference location of the first beam may be replaced with a reference location of the first cell. For another processing process, refer to the descriptions in FIG. 25.

It should be added that information may also be exchanged between network devices, and specific operations are performed as follows:
Step 1: A first network device determines first information.

The first information indicates the first network device to release a communication resource for the first region or the first beam.

For example, at a time t1, numbers of regions covered by the first network device are 1 to 100. At a time t2, numbers of regions covered by the first network device are 4 to 100, 103, and 105.

In other words, for the first network device, three regions (namely, the regions numbered 1 to 3) are moved out, and two regions (namely, the regions numbered 103 and 105) are moved in. In this case, the first region is the regions numbered 1 to 3. The first beam is a beam corresponding to the regions numbered 1 to 3.

Optionally, when the first information indicates to release the communication resource for the first region, the first information further indicates at least one of the following: an available time period corresponding to the first region, a frequency resource corresponding to the first region, or a polarization mode corresponding to the first region.

Optionally, when the first information indicates to release the communication resource for the first beam, the first information further indicates at least one of the following: an available time period corresponding to the first beam, a frequency resource corresponding to the first beam, or a polarization mode corresponding to the first beam.

Alternatively, the first information indicates to activate a communication resource for a second region or a second beam.

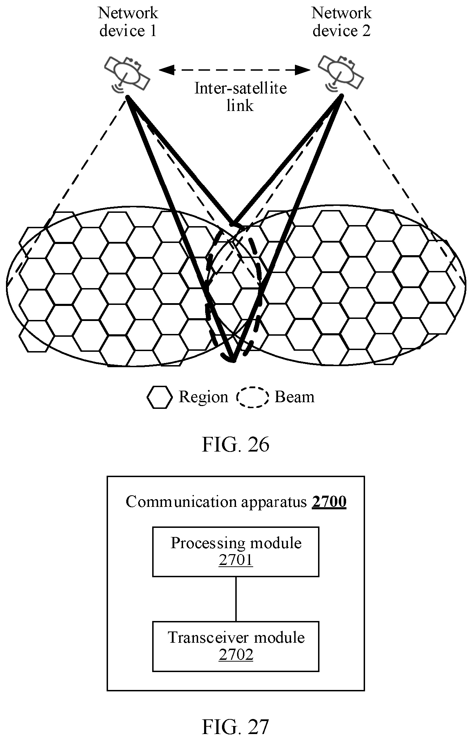

For example, at a time t1, numbers of regions covered by the first network device are 1 to 100. At a time t2, numbers of regions covered by the first network device are 4 to 100, 103, and 105, as shown in FIG. 26.

In other words, three regions (namely, the regions numbered 1 to 3) are moved out, and two regions (namely, the regions numbered 103 and 105) are moved in. In this case, the second region is the regions numbered 103 and 105. The second beam is a beam corresponding to the regions numbered 103 and 105.

Optionally, when the first information indicates to activate the communication resource for the second region, the first information further indicates at least one of the following: an available time period corresponding to the second region, a frequency resource corresponding to the second region, or a polarization mode corresponding to the second region.

Optionally, when the first information indicates to activate the communication resource for the second beam, the first information further indicates at least one of the following: an available time period corresponding to the second beam, a frequency resource corresponding to the second beam, or a polarization mode corresponding to the second beam.

Step 2: The first network device sends the first information to a second network device. Correspondingly, the second network device receives the first information from the first network device.

For the second network device, when the first information indicates the first network device to release the communication resource for the first region or the first beam, the second network device activates the communication resource indicated by the first information.

For example, considering that a satellite is characterized by progressive handover, for the first network device, the three regions (namely, the regions numbered 1 to 3) are moved out. For the second network device, the three regions (namely, the regions numbered 1 to 3) are moved in. Therefore, the first region is the regions numbered 1 to 3. The second network device activates the communication resource for the first region, or activates the communication resource for the first beam (namely, the beam corresponding to the first region), to implement information exchange between the network devices in an incremental update manner, and therefore implement mobility management or interference coordination.

For the second network device, when the first information indicates the first network device to activate the communication resource for the second region or the second beam, the second network device releases the communication resource indicated by the first information.

For example, considering that a satellite is characterized by progressive handover, for the first network device, the two regions (namely, the regions numbered 103 and 105) are moved in. For the second network device, the two regions (namely, the regions numbered 103 and 105) are moved out. Therefore, the second region is the regions numbered 103 and 105. The second network device releases the communication resource for the second region, or releases the communication resource for the second beam (namely, a beam corresponding to the second region), to implement information exchange between the network devices in an incremental update manner, and therefore implement mobility management or interference coordination.

It is easy to understand that the first information may alternatively be replaced with another description, for example:
That the first information indicates the first network device to release the communication resource for the first region may be replaced with: The first information indicates the second network device to activate the communication resource for the first region. Correspondingly, the second network device activates the communication resource for the first region based on the first information.

That the first information indicates the first network device to release the communication resource for the first beam may be replaced with: The first information indicates the second network device to activate the communication resource for the first beam. Correspondingly, the second network device activates the communication resource for the first beam based on the first information.

That the first information indicates the first network device to activate the communication resource for the second region may be replaced with: The first information indicates the second network device to release the communication resource for the second region. Correspondingly, the second network device releases the communication resource for the second region based on the first information.

That the first information indicates the first network device to activate the communication resource for the second beam may be replaced with: The first information indicates the second network device to release the communication resource for the second beam. Correspondingly, the second network device releases the communication resource for the second beam based on the first information.

It can be understood that, in the foregoing embodiments, the method and/or the steps implemented by the network device may alternatively be implemented by a part (for example, a processor, a chip, a chip system, a circuit, a logical module, or software) that may be used in the network device, and the method and/or the steps implemented by the terminal device may alternatively be implemented by a part (for example, a processor, a chip, a chip system, a circuit, a logical module, or software) that may be used in the terminal device. The chip system may include a chip, or the chip system may include a chip and another discrete component.

It can be understood that, to implement the foregoing functions, the communication apparatus includes a hardware structure and/or a software module for performing a corresponding function. A person skilled in the art should easily be aware that, in combination with the units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into modules is an example, and is merely a logical function division. During actual implementation, another division manner may be used.

FIG. 27 is a diagram of a structure of a communication apparatus 2700. The communication apparatus 2700 includes a processing module 2701 and a transceiver module 2702. The communication apparatus 2700 may be configured to implement a function of the foregoing network device or terminal device.

In some embodiments, the communication apparatus 2700 may further include a storage module (not shown in FIG. 27), configured to store program instructions and data.

In some embodiments, the transceiver module 2702 may also be referred to as a transceiver unit, and is configured to implement a sending function and/or a receiving function. The transceiver module 2702 may include a transceiver circuit, a transceiver machine, a transceiver, or a communication interface.

In some embodiments, the transceiver module 2702 may include a receiving module and a sending module, respectively configured to perform receiving and sending steps performed by the network device or the terminal device in the foregoing method embodiments and/or configured to support another process of the technology described in this specification. The processing module 2701 may be configured to perform processing (for example, determining) steps performed by the network device or the terminal device in the foregoing method embodiments and/or configured to support another process of the technology described in this specification.

All related content of the steps in the foregoing method embodiments may be cited in function descriptions of the corresponding functional modules. Details are not described herein again.

Optionally, in this application, that the transceiver module receives/sends information may alternatively be understood as that the processing module receives/sends the information by using the transceiver module. That the processing module receives/sends the information by using the transceiver module may alternatively be understood as that the processing module controls the transceiver module to receive/send the information. Alternatively, that the processing module sends the information by using the transceiver module may be understood as that the processing module outputs the information to the transceiver module, and the transceiver module sends the information; and that the processing module receives the information by using the transceiver module may be understood as that the transceiver module receives the information and inputs the information to the processing module.

In this application, the communication apparatus 2700 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 2700 in FIG. 27 is a chip or a chip system, a function/an implementation process of the transceiver module 2702 may be implemented by an input/output interface (or a communication interface) of the chip or the chip system, and a function/an implementation process of the processing module 2701 may be implemented by a processor (or a processing circuit) of the chip or the chip system.

The communication apparatus 2700 provided in this embodiment can perform the foregoing methods. Therefore, for technical effects that can be achieved by the communication apparatus 2700, refer to the foregoing method embodiments. Details are not described herein again.

In a possible product form, the network device or the terminal device in embodiments of this application may alternatively be implemented by using the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described throughout this application.

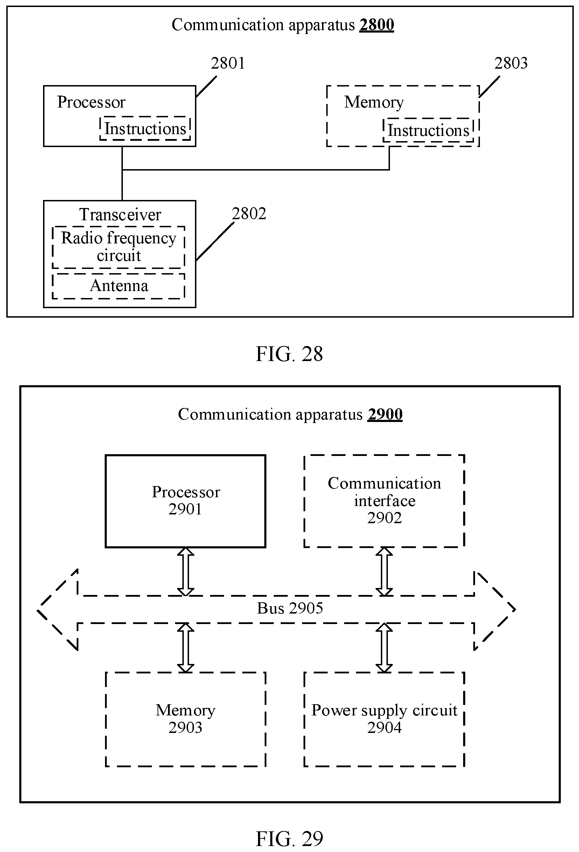

In another possible product form, the network device or the terminal device in embodiments of this application may be implemented by using a general bus architecture. For ease of description, FIG. 28 is a diagram of a structure of a communication apparatus 2800 according to an embodiment of this application. The communication apparatus 2800 includes a processor 2801 and a transceiver 2802. The communication apparatus 2800 may be a network device, or a chip or a chip system in the network device. Alternatively, the communication apparatus 2800 may be a terminal device, or a chip or a module in the terminal device. FIG. 28 shows only main components of the communication apparatus 2800. In addition to the processor 2801 and the transceiver 2802, the communication apparatus 2800 may further include a memory 2803 and an input/output apparatus (not shown in the figure).

Optionally, the processor 2801 is mainly configured to: process a communication protocol and communication data, control the entire communication apparatus, execute a software program, and process data of the software program. The memory 2803 is mainly configured to store the software program and data. The transceiver 2802 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 2801, the transceiver 2802, and the memory 2803 may be connected through a communication bus.

It should be noted that the memory 2803 may be independent of the processor 2801, or may be integrated with the processor 2801. The memory 2803 may be located inside the communication apparatus 2800, or may be located outside the communication apparatus 2800. This is not limited.

After the communication apparatus is powered on, the processor 2801 may read a software program in the memory 2803, interpret and execute instructions of the software program, and process data of the software program. When data needs to be sent wirelessly, after performing baseband processing on the to-be-sent data, the processor 2801 outputs a baseband signal to the radio frequency circuit. The radio frequency circuit performs radio frequency processing on the baseband signal and then sends a radio frequency signal to the outside in an electromagnetic wave form through the antenna. When data is sent to the communication apparatus, the radio frequency circuit receives a radio frequency signal through the antenna, converts the radio frequency signal into a baseband signal, and outputs the baseband signal to the processor 2801. The processor 2801 converts the baseband signal into data, and processes the data.

In another implementation, the radio frequency circuit and the antenna may be independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 2700 may be in the form of the communication apparatus 2800 shown in FIG. 28.

In an example, a function/an implementation process of the processing module 2701 in FIG. 27 may be implemented by the processor 2801 in the communication apparatus 2800 shown in FIG. 28 by invoking computer-executable instructions stored in the memory 2803. A function/an implementation process of the transceiver module 2702 in FIG. 27 may be implemented by the transceiver 2802 in the communication apparatus 2800 shown in FIG. 28.

In still another possible product form, the network device or the terminal device in this application may use a composition structure shown in FIG. 29, or include components shown in FIG. 29. FIG. 29 is a composition diagram of a communication apparatus 2900 according to this application.

As shown in FIG. 29, the communication apparatus 2900 includes at least one processor 2901. Optionally, the communication apparatus further includes a communication interface 2902.

When relevant program instructions are executed in the at least one processor 2901, the apparatus 2900 may be caused to implement the method according to any one of the foregoing embodiments and the possible designs of the foregoing embodiments. Alternatively, the processor 2901 is configured to implement, by using a logic circuit or executing code instructions, the method according to any one of the foregoing embodiments and the possible designs of the foregoing embodiments.

The communication interface 2902 may be configured to: receive program instructions, and transmit the program instructions to the processor. Alternatively, the communication interface 2902 may be configured to perform communication interaction between the communication apparatus 2900 and another communication device, for example, exchange control signaling and/or service data. For example, the communication interface 2902 may be configured to: receive a signal from an apparatus other than the communication apparatus 2900, and transmit the signal to the processor 2901; or send a signal from the processor 2901 to a communication apparatus other than the communication apparatus 2900.

Optionally, the communication interface 2902 may be a code and/or data read/write interface circuit, or the communication interface 2902 may be a signal transmission interface circuit between a communication processor and a transceiver, or may be a pin of a chip.

Optionally, the communication apparatus 2900 may further include at least one memory 2903, and the memory 2903 may be configured to store relevant program instructions and/or data needed.

It should be noted that the memory 2903 may be independent of the processor 2901, or may be integrated with the processor 2901. The memory 2903 may be located inside the communication apparatus 2900, or may be located outside the communication apparatus 2900. This is not limited.

Optionally, the communication apparatus 2900 may further include a power supply circuit 2904, and the power supply circuit 2904 may be configured to supply power to the processor 2901. The power supply circuit 2904 may be located in a same chip as the processor 2901, or may be located in a chip other than a chip in which the processor 2901 is located.

Optionally, the communication apparatus 2900 may further include a bus 2905, and the parts in the communication apparatus 2900 may be interconnected through the bus 2905.

In some embodiments, in terms of hardware implementation, a person skilled in the art may figure out that the communication apparatus 2700 shown in FIG. 27 may be in the form of the communication apparatus 2900 shown in FIG. 29.

In an example, a function/an implementation process of the processing module 2701 in FIG. 27 may be implemented by the processor 2901 in the communication apparatus 2900 shown in FIG. 29 by invoking computer-executable instructions stored in the memory 2903. A function/an implementation process of the transceiver module 2702 in FIG. 27 may be implemented by the communication interface 2902 in the communication apparatus 2900 shown in FIG. 29.

It should be noted that the structure shown in FIG. 29 does not constitute a specific limitation on the network device or the terminal device. For example, in some other embodiments of this application, the network device or the terminal device may include more or fewer components than those shown in the figure, some components may be combined, some components may be split, or there is a different component arrangement. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of random access memories (random access memories, RAMs) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It can be understood that the communication apparatus may be a chip or a chip system. When the communication apparatus is a chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It can be understood that the system, apparatuses, and methods described in this application may alternatively be implemented in another manner. For example, the described apparatus embodiments are merely examples. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate components may or may not be physically separate, that is, may be located in one location, or may be distributed on a plurality of network units. Parts displayed as units may be or may not be physical units. Some or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, applied to a terminal device, wherein the method comprises:
determining a first parameter, wherein the first parameter is associated with an angle, and the angle comprises a beam steering angle or an elevation angle; and
determining a reference location of a first region based on the first parameter and a first mapping relationship, wherein the first mapping relationship indicates a conversion relationship between the first parameter and the reference location of the first region.

2. The method according to claim 1, wherein the method further comprises:
obtaining a location of the terminal device; and
determining, based on the location of the terminal device and the reference location of the first region, a reference location of a region in which the terminal device is located.

3. The method according to claim 1, wherein the method further comprises:
obtaining a region identifier; and
the determining the reference location of the first region based on the first parameter and the first mapping relationship comprises:
determining the reference location of the first region based on the region identifier, the first parameter, and the first mapping relationship, wherein the first region is a region corresponding to the region identifier.

4. The method according to any one of claims 1 to 3, wherein
the first parameter indicates a first quantity of regions;
the first parameter indicates a first region radius;
the first parameter indicates a first region level, wherein the first region level and a second parameter are for determining a first quantity of regions, and the second parameter is a second quantity of regions; or
the first parameter indicates a first region level, wherein the first region level and a second parameter are for determining a first region radius, and the second parameter is a second region radius.

5. The method according to claim 4, wherein
a larger beam steering angle indicates a smaller quantity of regions that is indicated by the first parameter; and/or
a larger beam steering angle indicates a larger region radius indicated by the first parameter.

6. The method according to any one of claims 1 to 5, wherein the method further comprises:
receiving a third parameter, wherein the third parameter indicates at least one angle range, and each of the at least one angle range corresponds to one fourth parameter; and
obtaining a first angle, wherein the first angle is an elevation angle of the terminal device or a beam steering angle corresponding to the terminal device; and
the determining the first parameter comprises:
determining, based on the at least one angle range and the first angle, the first parameter from the fourth parameter corresponding to the at least one angle range.

7. The method according to any one of claims 1 to 5, wherein the method further comprises:
receiving a third parameter, wherein the third parameter indicates at least one geographic range, and each of the at least one geographic range corresponds to one fourth parameter; and
obtaining the location of the terminal device; and
the determining the first parameter comprises:
determining, based on the at least one geographic range and the location of the terminal device, the first parameter from the fourth parameter corresponding to the at least one geographic range.

8. The method according to any one of claims 1 to 7, wherein
the first mapping relationship satisfies: $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot _ k}}\right)$
wherein *RL*(*k, i*) represents three-dimensional coordinates corresponding to the reference location of the first region, *k* represents an identifier of the first region level, *i* represents the region identifier of the first region, *i* is a non-negative integer less than *N*_{*spot*_*k*}, *Rₑ* represents a parameter of an earth surface on which the first region is located, *N*_{*spot*_*k*} represents the first quantity of regions, and [ ] represents a fractional part operator.

9. The method according to any one of claims 1 to 8, wherein the method further comprises:
receiving indication information of a first offset; and
the determining the reference location of the first region based on the first parameter and the first mapping relationship comprises:
determining the reference location of the first region based on the first offset, the first parameter, and the first mapping relationship.

10. The method according to any one of claims 1 to 9, wherein
the first region comprises at least one of the following types:
a broadcast region, wherein the broadcast region is a geographic region covered by a broadcast beam; or
a service region, wherein the service region is a geographic region covered by a traffic beam.

11. The method according to claim 10, wherein the first region is the broadcast region, and the first region is the region in which the terminal device is located; and the method further comprises:
receiving access information, wherein the access information indicates an access configuration corresponding to the first region; and
initiating random access based on the access configuration corresponding to the first region.

12. The method according to claim 10, wherein the first region is the service region, and the first region is the region in which the terminal device is located; and the method further comprises:
receiving service resource information, wherein the service resource information indicates a communication resource configuration corresponding to the first region; and
performing service transmission based on the communication resource configuration corresponding to the first region.

13. The method according to any one of claims 1 to 12, wherein the method further comprises:
triggering neighboring cell measurement or sending a neighboring cell measurement result based on the reference location of the first region and the location of the terminal device, wherein the neighboring cell measurement result is for cell handover or cell reselection.

14. The method according to claim 13, wherein the method further comprises:
receiving indication information of a first threshold;
the triggering the neighboring cell measurement based on the reference location of the first region and the location of the terminal device comprises:
triggering the neighboring cell measurement when a distance between the reference location of the first region and the location of the terminal device is greater than or equal to the first threshold; and
the sending the neighboring cell measurement result based on the reference location of the first region and the location of the terminal device comprises:
sending the neighboring cell measurement result when the distance between the reference location of the first region and the location of the terminal device is greater than or equal to the first threshold.

15. The method according to any one of claims 1 to 12, wherein the method further comprises:
triggering cell handover based on the reference location of the first region, the location of the terminal device, and signal quality of a neighboring cell.

16. The method according to claim 15, wherein the method further comprises:
receiving indication information of a first threshold and indication information of a second threshold; and
the triggering the cell handover based on the reference location of the first region, the location of the terminal device, and the signal quality of the neighboring cell comprises:
triggering the cell handover when a distance between the reference location of the first region and the location of the terminal device is greater than or equal to the first threshold and the signal quality of the neighboring cell is greater than or equal to the second threshold.

17. The method according to any one of claims 1 to 16, wherein the first region is the region in which the terminal device is located, and the first region belongs to a first cell; and the method further comprises:
sending an interference measurement result, wherein the interference measurement result indicates strength of interference from another cell to the first cell.

18. The method according to claim 17, wherein the interference measurement result further indicates at least one of the following: the first region or a first time period; and the strength of interference is strength of interference from the another cell to the first cell in the first time period.

19. A communication method, applied to a terminal device, wherein the method comprises:
determining a first parameter and a second parameter, wherein the first parameter indicates a first beam level, each beam at the first beam level covers L regions among X regions, the first parameter is associated with an angle, the angle comprises a beam steering angle or an elevation angle, and the second parameter indicates a quantity X of regions, wherein X and L are positive integers; and
determining a reference location of a first region based on the first beam level, the quantity of regions, and a first mapping relationship, wherein the first mapping relationship indicates a conversion relationship between the reference location of the first region and both the first beam level and the quantity of regions, and the first region is a region among the X regions.

20. The method according to claim 19, wherein the method further comprises:
obtaining a location of the terminal device; and
determining, based on the location of the terminal device and the reference location of the first region, a reference location of a region in which the terminal device is located.

21. The method according to claim 19, wherein the method further comprises:
obtaining a region identifier; and
the determining the reference location of the first region based on the first beam level, the quantity of regions, and the first mapping relationship comprises:
determining the reference location of the first region based on the region identifier, the first beam level, the quantity of regions, and the first mapping relationship, wherein the first region is a region corresponding to the region identifier.

22. The method according to any one of claims 19 to 21, wherein
that the second parameter indicates the quantity of regions comprises:
the second parameter comprises the quantity of regions; or
the second parameter comprises a region radius, wherein the region radius is for determining the quantity of regions.

23. The method according to any one of claims 19 to 22, wherein the method further comprises:
receiving a third parameter, wherein the third parameter indicates at least one angle range, and each of the at least one angle range corresponds to one fourth parameter; and
obtaining a first angle, wherein the first angle is an elevation angle of the terminal device or a beam steering angle corresponding to the terminal device; and
the determining the first parameter comprises:
determining, based on the at least one angle range and the first angle, the first parameter from the fourth parameter corresponding to the at least one angle range.

24. The method according to any one of claims 19 to 22, wherein the method further comprises:
receiving a third parameter, wherein the third parameter indicates at least one geographic range, and each of the at least one geographic range corresponds to one fourth parameter; and
obtaining the location of the terminal device; and
the determining the first parameter comprises:
determining, based on the at least one geographic range and the location of the terminal device, the first parameter from the fourth parameter corresponding to the at least one geographic range.

25. The method according to any one of claims 19 to 24, wherein
the first mapping relationship satisfies: $RL \left(k, i\right) = {R}_{e} \times \left(cos {φ}_{i} sin {θ}_{i}, sin {φ}_{i} sin {θ}_{i}, cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot}}\right)$
wherein *RL*(*k, i*) represents three-dimensional coordinates corresponding to the reference location of the first region, *k* represents an identifier of the first beam level, *i* represents the region identifier of the first region, *i* is a non-negative integer less than *Nₛₚₒₜ*, *Rₑ* represents a parameter of an earth surface on which the first region is located, *Nₛₚₒₜ* represents the quantity of regions, and [ ] represents a fractional part operator;
the first mapping relationship satisfies: $RL \left(k, i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot}} - 1$ $∅ = \frac{1 + \sqrt{5}}{2}$
wherein *RL*(*k, i*) represents three-dimensional coordinates corresponding to the reference location of the first region, *k* represents an identifier of the first beam level, *i* represents the region identifier of the first region, *i* is a non-negative integer less than *Nₛₚₒₜ*, *Rₑ* represents a parameter of an earth surface on which the first region is located, and *Nₛₚₒₜ* represents the quantity of regions; or
the first mapping relationship satisfies: $RL \left(k, i\right) = \left(lon\left(k, i\right),lat\left(k, i\right)\right)$ $lon \left(k, i\right) = {sin}^{- 1} \left(\frac{2 i}{2 N + 1}\right)$ $lat \left(k, i\right) = 2 πi {∅}^{- 1}$ ${N}_{spot} = 2 N + 1$ $∅ = \frac{1 + \sqrt{5}}{2}$
wherein *RL(k, i)* represents the reference location of the first region, *lon*(*k, i*) represents a longitude corresponding to the reference location of the first region, *lat*(*k, i*) represents a latitude corresponding to the reference location of the first region, *k* represents an identifier of the first beam level, *i* represents the region identifier of the first region, *i* is a non-negative integer less than *Nₛₚₒₜ*, and *Nₛₚₒₜ* represents the quantity of regions.

26. The method according to any one of claims 19 to 25, wherein
the first region comprises at least one of the following types:
a broadcast region, wherein the broadcast region is a geographic region covered by a broadcast beam; or
a service region, wherein the service region is a geographic region covered by a traffic beam.

27. The method according to claim 26, wherein the first region is the broadcast region, the first region is the region in which the terminal device is located, and the first region is a region covered by a first beam; and the method further comprises:
receiving access information, wherein the access information indicates an access configuration corresponding to the first beam; and
initiating random access based on the access configuration corresponding to the first beam.

28. The method according to claim 26, wherein the first region is the service region, the first region is the region in which the terminal device is located, and the first region is a region covered by a first beam; and the method further comprises:
receiving service resource information, wherein the service resource information indicates a communication resource configuration corresponding to the first beam; and
performing service transmission based on the communication resource configuration corresponding to the first beam.

29. The method according to any one of claims 19 to 28, wherein the first region is the region covered by the first beam; and the method further comprises:
triggering neighboring cell measurement or sending a neighboring cell measurement result based on a reference location of the first beam and the location of the terminal device, wherein the neighboring cell measurement result is for cell handover or cell reselection.

30. The method according to claim 29, wherein the method further comprises:
receiving indication information of a first threshold;
the triggering the neighboring cell measurement based on the reference location of the first beam and the location of the terminal device comprises:
triggering the neighboring cell measurement when a distance between the reference location of the first beam and the location of the terminal device is greater than or equal to the first threshold; and
the sending the neighboring cell measurement result based on the reference location of the first beam and the location of the terminal device comprises:
sending the neighboring cell measurement result when the distance between the reference location of the first beam and the location of the terminal device is greater than or equal to the first threshold.

31. The method according to any one of claims 19 to 28, wherein the first region is the region covered by the first beam; and the method further comprises:
triggering cell handover based on a reference location of the first beam, the location of the terminal device, and signal quality of a neighboring cell.

32. The method according to claim 31, wherein the method further comprises:
receiving indication information of a first threshold and indication information of a second threshold; and
the triggering the cell handover based on the reference location of the first beam, the location of the terminal device, and the signal quality of the neighboring cell comprises:
triggering the cell handover when a distance between the reference location of the first beam and the location of the terminal device is greater than or equal to the first threshold and the signal quality of the neighboring cell is greater than or equal to the second threshold.

33. The method according to any one of claims 29 to 32, wherein
the reference location of the first beam is the reference location of the first region; or
the reference location of the first beam is determined based on a reference location of each region covered by the first beam.

34. The method according to any one of claims 19 to 33, wherein the first region is the region in which the terminal device is located, and the first region belongs to a first cell; and the method further comprises:
sending an interference measurement result, wherein the interference measurement result represents strength of interference from another cell to the first cell.

35. The method according to claim 34, wherein the interference measurement result further indicates at least one of the following: the first beam or a first time period; and the first region is the region covered by the first beam, and the strength of interference is strength of interference from the another cell to the first cell in the first time period.

36. The method according to any one of claims 27 to 35, wherein the method further comprises:
obtaining the first mapping relationship, wherein the first mapping relationship indicates the region covered by the first beam, and the region covered by the first beam comprises the first region.

37. The method according to claim 26, wherein the first region is the broadcast region, the first region is the region in which the terminal device is located, and the first region is a region covered by a first cell; and the method further comprises:
receiving access information, wherein the access information indicates an access configuration corresponding to the first cell; and
initiating random access based on the access configuration corresponding to the first cell.

38. The method according to claim 26, wherein the first region is the service region, the first region is the region in which the terminal device is located, and the first region is a region covered by a first cell; and the method further comprises:
receiving service resource information, wherein the service resource information indicates a communication resource configuration corresponding to the first cell; and
performing service transmission based on the communication resource configuration corresponding to the first cell.

39. The method according to any one of claims 19 to 26, 37, and 38, wherein the first region is the region in which the terminal device is located, and the first region is the region covered by the first cell; and the method further comprises:
triggering neighboring cell measurement or sending a neighboring cell measurement result based on a reference location of the first cell and the location of the terminal device, wherein the neighboring cell measurement result is for cell handover or cell reselection.

40. The method according to claim 39, wherein the method further comprises:
receiving indication information of a first threshold;
the triggering the neighboring cell measurement based on the reference location of the first cell and the location of the terminal device comprises:
triggering the neighboring cell measurement when a distance between the reference location of the first cell and the location of the terminal device is greater than or equal to the first threshold; and
the sending the neighboring cell measurement result based on the reference location of the first cell and the location of the terminal device comprises:
sending the neighboring cell measurement result when the distance between the reference location of the first cell and the location of the terminal device is greater than or equal to the first threshold.

41. The method according to any one of claims 19 to 26, 37, and 38, wherein the first region is the region in which the terminal device is located, and the first region is the region covered by the first cell; and the method further comprises:
triggering cell handover based on a reference location of the first cell, the location of the terminal device, and signal quality of a neighboring cell.

42. The method according to claim 41, wherein the method further comprises:
receiving indication information of a first threshold and indication information of a second threshold; and
the triggering the cell handover based on the reference location of the first cell, the location of the terminal device, and the signal quality of the neighboring cell comprises:
triggering the cell handover when a distance between the reference location of the first cell and the location of the terminal device is greater than or equal to the first threshold and the signal quality of the neighboring cell is greater than or equal to the second threshold.

43. The method according to any one of claims 39 to 42, wherein
the reference location of the first cell is the reference location of the first region; or
the reference location of the first cell is determined based on a reference location of each region covered by the first cell.

44. The method according to any one of claims 39 to 43, wherein the method further comprises:
obtaining a second mapping relationship, wherein the second mapping relationship indicates the region covered by the first cell, and the region covered by the first cell comprises the first region.

45. A communication method, applied to a network device, wherein the method comprises:
determining a first parameter, wherein the first parameter is associated with an angle, and the angle comprises a beam steering angle or an elevation angle; and
sending the first parameter, wherein the first parameter is for determining a reference location of a first region.

46. The method according to claim 45, wherein
the first parameter indicates a first quantity of regions;
the first parameter indicates a first region radius;
the first parameter indicates a first region level, wherein the first region level and a second parameter are for determining a first quantity of regions, and the second parameter is a second quantity of regions; or
the first parameter indicates a first region level, wherein the first region level and a second parameter are for determining a first region radius, and the second parameter is a second region radius.

47. The method according to claim 45 or 46, wherein the method further comprises:
sending a third parameter, wherein
the third parameter indicates at least one angle range, and the at least one angle range is for determining the first parameter.

48. The method according to claim 45 or 46, wherein the method further comprises:
sending a third parameter, wherein the third parameter indicates at least one geographic range, and the at least one geographic range is for determining the first parameter.

49. The method according to any one of claims 45 to 48, wherein the method further comprises:
sending indication information of a first offset, wherein the first offset is for determining the reference location of the first region.

50. The method according to any one of claims 45 to 49, wherein the method further comprises:
sending access information, wherein the access information indicates an access configuration corresponding to the first region.

51. The method according to any one of claims 45 to 49, wherein the method further comprises:
sending service resource information, wherein the service resource information indicates a communication resource configuration corresponding to the first region.

52. The method according to any one of claims 45 to 51, wherein the method further comprises:
sending indication information of a first threshold, wherein the first threshold is for triggering neighboring cell measurement, triggering sending of a neighboring cell measurement result, or triggering cell handover.

53. The method according to any one of claims 45 to 52, wherein the first region belongs to a first cell; and the method further comprises:
receiving an interference measurement result, wherein the interference measurement result indicates strength of interference from another cell to the first cell.

54. The method according to claim 53, wherein the interference measurement result further indicates at least one of the following: the first region or a first time period; and the strength of interference is strength of interference from the another cell to the first cell in the first time period.

55. A communication method, applied to a network device, wherein the method comprises:
determining a first parameter and a second parameter, wherein the first parameter indicates a first beam level, each beam at the first beam level covers L regions among X regions, the first parameter is associated with an angle, the angle comprises a beam steering angle or an elevation angle, and the second parameter indicates a quantity X of regions, wherein X and L are positive integers; and
sending the first parameter and the second parameter, wherein the first parameter and the second parameter are for determining a reference location of a first region, and the first region is a region among the X regions.

56. The method according to claim 55, wherein
that the second parameter indicates the quantity of regions comprises:
the second parameter comprises the quantity of regions; or
the second parameter comprises a region radius, wherein the region radius is for determining the quantity of regions.

57. The method according to claim 55 or 56, wherein the method further comprises: sending a third parameter, wherein the third parameter indicates at least one angle range, and the at least one angle range is for determining the first parameter.

58. The method according to claim 55 or 56, wherein the method further comprises: sending a third parameter, wherein the third parameter indicates at least one geographic range, and the at least one geographic range is for determining the first parameter.

59. The method according to any one of claims 55 to 58, wherein
the first region comprises at least one of the following types:
a broadcast region, wherein the broadcast region is a geographic region covered by a broadcast beam; or
a service region, wherein the service region is a geographic region covered by a traffic beam.

60. The method according to claim 59, wherein the method further comprises: sending access information, wherein the access information indicates an access configuration corresponding to the first beam.

61. The method according to claim 59, wherein the method further comprises: sending service resource information, wherein the service resource information indicates a communication resource configuration corresponding to the first beam.

62. The method according to claim 61, wherein the method further comprises: sending indication information of a first threshold, wherein the first threshold is for triggering neighboring cell measurement, triggering sending of a neighboring cell measurement result, or triggering cell handover.

63. The method according to any one of claims 56 to 62, wherein the first region belongs to a first cell; and the method further comprises: receiving an interference measurement result, wherein the interference measurement result represents strength of interference from another cell to the first cell.

64. The method according to claim 63, wherein the interference measurement result further indicates at least one of the following: the first beam or a first time period; and the first region is a region covered by the first beam, and the strength of interference is strength of interference from the another cell to the first cell in the first time period.

65. The method according to any one of claims 55 to 64, wherein the method further comprises: sending a first mapping relationship, wherein the first mapping relationship indicates the region covered by the first beam, and the region covered by the first beam comprises the first region.

66. The method according to claim 55, wherein the first region is a region covered by a first cell; and the method further comprises: sending access information, wherein the access information indicates an access configuration corresponding to the first cell.

67. The method according to claim 55, wherein the first region is a region covered by a first cell; and the method further comprises: sending service resource information, wherein the service resource information indicates a communication resource configuration corresponding to the first cell.

68. The method according to any one of claims 63 to 67, wherein the method further comprises: sending a second mapping relationship, wherein the second mapping relationship indicates the region covered by the first cell, and the region covered by the first cell comprises the first region.

69. A communication method, applied to a network device, wherein the method comprises:
determining first information, wherein the first information indicates to release a communication resource for a first region or a first beam, or the first information indicates to activate a communication resource for a second region or a second beam; and
sending the first information.

70. A communication method, applied to a network device, wherein the method comprises:
receiving first information, wherein the first information indicates to release a communication resource for a first region or a first beam, or the first information indicates to activate a communication resource for a second region or a second beam; and
when the first information indicates to release the communication resource for the first region or the first beam, releasing the communication resource indicated by the first information; or
when the first information indicates to activate the communication resource for the second region or the second beam, activating the communication resource indicated by the first information.

71. A communication apparatus, wherein the communication apparatus comprises a processor, and the processor is configured to run a computer program or instructions, to cause the communication apparatus to perform the method according to any one of claims 1 to 18, the method according to any one of claims 19 to 44, the method according to any one of claims 45 to 54, the method according to any one of claims 55 to 68, the method according to claim 69, or the method according to claim 70.

72. A computer-readable storage medium, wherein the computer-readable storage medium stores computer instructions or a program; and when the computer instructions or the program is run on a computer, the method according to any one of claims 1 to 18, the method according to any one of claims 19 to 44, the method according to any one of claims 45 to 54, the method according to any one of claims 55 to 68, the method according to claim 69, or the method according to claim 70 is performed.

73. A computer program product, wherein the computer program product comprises computer instructions; and when all or part of the computer instructions are run on a computer, the method according to any one of claims 1 to 18, the method according to any one of claims 19 to 44, the method according to any one of claims 45 to 54, the method according to any one of claims 55 to 68, the method according to claim 69, or the method according to claim 70 is performed.

74. A chip, comprising:
a memory, configured to store computer program instructions; and
a processor, configured to execute the computer program instructions, to cause a communication apparatus comprising the chip to perform the method according to any one of claims 1 to 18, the method according to any one of claims 19 to 44, the method according to any one of claims 45 to 54, the method according to any one of claims 55 to 68, the method according to claim 69, or the method according to claim 70.

75. A communication system, comprising a terminal device and a network device, wherein the terminal device is configured to perform the method according to any one of claims 1 to 18, and the network device is configured to perform the method according to any one of claims 45 to 54; or the terminal device is configured to perform the method according to any one of claims 19 to 44, and the network device is configured to perform the method according to any one of claims 55 to 68.
